# EUROPEAN PATENT APPLICATION

(11) **EP 4 838 544 A2**
(43) Date of publication of application: **11.11.2026**
(21) Application number: 26207258.0
(22) Date of filing: 19.01.2023
(51) Int. Cl.: H01C 1/14

(54) **SURGE PROTECTIVE DEVICE MODULES AND ASSEMBLIES**

(30) Priority: 24.01.2022 US 202263302267 P; 28.12.2022 US 202218147036
(62) Document number(s) of the earlier application(s) in accordance with Art. 76 EPC: 23152520.5 / 4 216 237
(71) Applicant: RAYCAP IP DEVELOPMENT LTD, Nicosia (CY)
(72) Inventor: GOLOB, Peter, 3204 Dobrna (SI); ZUNIC, Rok, 1000 Ljubljana (SI); PREGELJ, Zan, 1275 Smartno pri Litiji (SI); GOLOB, Ales, 1000 Ljubljana (SI)
(74) Representative: HL Kempner PartG mbB

(57) **Abstract**

A surge protective device (SPD) assembly includes a base and an SPD module configured to be mounted on the base. The SPD module includes an SPD module PCB, an SPD module circuit, and a thermal disconnector mechanism. The SPD module circuit is at least partly embodied in the SPD module PCB and includes an overvoltage protection component mounted on the SPD module PCB. The thermal disconnector mechanism is mounted on the SPD module PCB in a ready configuration. The thermal disconnector mechanism is operative to transition from the ready configuration to an actuated configuration responsive to sufficient overheating of the overvoltage protection component. When the thermal disconnector mechanism is positioned in the ready configuration, the SPD circuit forms a first current path through the overvoltage protection component. When the thermal disconnector mechanism is positioned in the actuated configuration, the thermal disconnector mechanism forms an alternate second current path that bypasses the overvoltage protection component.

## Description

### Related Application(s)

The present application claims the benefit of and priority from U.S. Provisional Patent Application No. 63/302,267, filed January 24, 2022, the disclosure of which is incorporated herein by reference.

### Field of the Invention

The present invention relates to surge protective devices and, more particularly, to surge protective device modules.

### Background of the Invention

Surge protective devices are commonly used to protect data communications lines from excess voltage or current spikes.

### Summary

According to some embodiments, a surge protective device (SPD) assembly includes a base and an SPD module configured to be mounted on the base. The SPD module includes an SPD module printed circuit board (PCB), an SPD module circuit, and a thermal disconnector mechanism. The SPD module circuit is at least partly embodied in the SPD module PCB and includes an overvoltage protection component mounted on the SPD module PCB. The thermal disconnector mechanism is mounted on the SPD module PCB. The thermal disconnector mechanism is mounted on the SPD module PCB in a ready configuration. The thermal disconnector mechanism is operative to transition from the ready configuration to an actuated configuration responsive to sufficient overheating of the overvoltage protection component. When the thermal disconnector mechanism is positioned in the ready configuration, the SPD circuit forms a first current path through the overvoltage protection component. When the thermal disconnector mechanism is positioned in the actuated configuration, the thermal disconnector mechanism forms an alternate second current path that bypasses the overvoltage protection component.

According to some embodiments, the thermal disconnector mechanism includes first and second electrically conductive bypass contacts mounted on the SPD module PCB and connected to the SPD module circuit, and the thermal disconnector mechanism includes a thermal actuator including a switch member. The switch member includes an electrically conductive portion. The thermal disconnector mechanism is transitioned from the ready configuration to the actuated configuration by displacing the switch member is movable from a ready position to a displaced position to thereby transition the thermal disconnector mechanism from the ready configuration to the actuated configuration. In the ready configuration, the electrically conductive portion does not electrically connect the first and second bypass contacts. When the thermal disconnector mechanism is positioned in the actuated configuration, the switch member is in the displaced position and the electrically conductive portion contacts and electrically connects the first and second bypass contacts to form the alternate second current path through the electrically conductive portion and the first and second bypass contacts that bypasses the overvoltage protection component.

In some embodiments, the first bypass contact is an electrically conductive first pin mounted on the SPD module PCB, and the second bypass contact is an electrically conductive second pin mounted on the SPD module PCB.

In some embodiments, the switch member includes a body formed of an electrically insulating material, and the electrically conductive portion is a layer of an electrically conductive material.

According to some embodiments, the switch member is loaded to move from the ready position to the displaced position, the switch member is held in the ready position by solder, and the solder is configured to be melted by heat from the overvoltage protection component to thereby release the switch member into the displaced position.

In some embodiments, the SPD module circuit includes first and second contact pads on the SPD module PCB, and the switch member includes a second electrically conductive portion. The solder is located on the first and second contact pads and secures the second electrically conductive portion to the first and second contact pads. The second electrically conductive portion electrically connects the first and second contact pads when the thermal disconnector mechanism is in the ready configuration and does not electrically connect the first and second contact pads when the thermal disconnector mechanism is in the actuated configuration.

According to some embodiments, the SPD module circuit includes first and second contact pads on the SPD module PCB, and the switch member includes a second electrically conductive portion that electrically connects the first and second contact pads when the thermal disconnector mechanism is in the ready configuration and does not electrically connect the first and second contact pads when the thermal disconnector mechanism is in the actuated configuration.

According to some embodiments, the switch member translates from the ready position to the displaced position.

In some embodiments, the SPD module includes a displaceable indicator member, and the translation of the switch member from the ready position to the displaced position forces the indicator member to translate from a ready position to an indicating position.

In some embodiments, the SPD module includes a displaceable indicator member, and the translation of the switch member from the ready position to the displaced position forces the indicator member to rotate from a ready position to an indicating position.

According to some embodiments, the base includes a base module that includes: a base module housing; an input cable connector and an output cable connector on the housing; at least one base connector on the housing; and a base module circuit electrically connecting the input cable connector to the output cable connector, and electrically connecting the input cable connector and the output cable connector to the at least one base connector. The SPD module is configured to be mounted on the base module. The SPD module includes an SPD module housing, and at least one SPD module connector configured to electrically contact the at least one base connector when the SPD module is mounted on the base module and to thereby electrically connect the base module circuit to the SPD module circuit to form an SPD circuit. The first current path extends from the input cable connector to the output cable connector through the overvoltage protection component. The second current path extends from the input cable connector to the output cable connector through the SPD module circuit and bypasses the overvoltage protection component.

In some embodiments, the base module includes a disconnecting mechanism including an actuator member; and the actuator member is selectively operable by a user to electrically disconnect the input cable connector from the output cable connector.

In some embodiments, the disconnecting mechanism includes a switch, and the actuator member is selectively operable by a user to electrically disconnect the input cable connector from the output cable connector via the switch.

In some embodiments, the at least one SPD module connector includes a blade connector.

According to some embodiments, the at least one base connector includes first and second opposed base spring contacts, the blade connector has a first side edge and a laterally opposing second side edge, wherein the first and second side edges are spaced apart along a lateral axis, and the blade connector includes: a blade tab forming a part of the SPD module PCB; a first electrical contact layer disposed on the blade tab along the first side edge; and a second electrical contact layer on the blade tab along the second side edge. The at least one base connector is configured to receive the blade connector such that the first and second base spring contacts engage the first and second electrical contact layers, respectively, and load the first and second side edges along the lateral axis.

In some embodiments, the first base contact is a spring contact, and when the blade connector is received in the base connector, the spring contact is elastically deflected and applies a load against the first side edge along the lateral axis.

In some embodiments, the base connector is configured such that the first and second base contacts electrically engage one another when blade connector is not installed in the base connector.

In some embodiments, the first and second base contacts and the blade connector include cooperating interlock features that mechanically resist removal of the blade connector from the base connector.

In some embodiments, the first and second side edges are narrow side edges.

According to some embodiments, a surge protective device (SPD) module includes an SPD module printed circuit board (PCB), an SPD module circuit, and a thermal disconnector mechanism. The SPD module circuit is at least partly embodied in the SPD module PCB and includes an overvoltage protection component mounted on the SPD module PCB. The thermal disconnector mechanism is mounted on the SPD module PCB. The thermal disconnector mechanism is mounted on the SPD module PCB in a ready configuration. The thermal disconnector mechanism is operative to transition from the ready configuration to an actuated configuration responsive to sufficient overheating of the overvoltage protection component. When the thermal disconnector mechanism is positioned in the ready configuration, the SPD circuit forms a first current path through the overvoltage protection component. When the thermal disconnector mechanism is positioned in the actuated configuration, the thermal disconnector mechanism forms an alternate second current path that bypasses the overvoltage protection component.

According to some embodiments, a surge protective device (SPD) assembly includes a base and an SPD module. The base includes a base connector. The base connector includes first and second opposed base contacts. The SPD module is configured to be mounted on the base. The SPD module includes an SPD module printed circuit board (PCB), an SPD module circuit, and a blade connector. The SPD module circuit includes an overvoltage protection component. The blade connector has a first side edge and a laterally opposing second side edge. The first and second side edges are spaced apart along a lateral axis. The blade connector includes a blade tab forming a part of the SPD module PCB, a first electrical contact layer disposed on the blade tab along the first side edge, and a second electrical contact layer on the blade tab along the second side edge. The base connector is configured to receive the blade connector such that the first and second base contacts engage the first and second electrical contact layers, respectively, and the first and second base contacts are loaded against the first and second side edges along the lateral axis.

According to some embodiments, the first base contact is a spring contact and, when the blade connector is received in the base connector, the spring contact is elastically deflected and applies a load against the first side edge along the lateral axis.

In some embodiments, the base connector is configured such that the first and second base contacts electrically engage one another when blade connector is not installed in the base connector.

In some embodiments, the SPD module circuit is at least partly embodied in the SPD module PCB, and the overvoltage protection component is mounted on the SPD module PCB
According to some embodiments, the first and second base contacts and the blade connector include cooperating interlock features that mechanically resist removal of the blade connector from the base connector.

In some embodiments, the first and second side edges are narrow side edges.

According to some embodiments, a surge protective device (SPD) assembly includes a base module and an SPD module. The base module includes a base module housing, an input cable connector and an output cable connector on the housing, at least one base connector on the housing, a base module circuit, and a disconnecting mechanism. The base module circuit electrically connects the input cable connector to the output cable connector, and electrically connects the input cable connector and the output cable connector to the at least one base connector. The disconnecting mechanism includes a switch and an actuator member. The actuator member is selectively operable by a user to electrically disconnect the input cable connector from the output cable connector via the switch. The SPD module is configured to be mounted on the base module. The SPD module includes an SPD module housing, an SPD module circuit including an overvoltage protection component, and at least one SPD module connector configured to electrically contact the at least one base connector when the SPD module is mounted on the base module and to thereby electrically connect the base module circuit to the SPD module circuit to form an SPD circuit.

According to some embodiments, the disconnecting mechanism includes a switch, and the actuator member is selectively operable by a user to electrically disconnect the input cable connector from the output cable connector via the switch.

In some embodiments, the base module circuit includes a second overvoltage protection component.

According to some embodiments, a surge protective device (SPD) assembly includes an input cable connector, an output cable connector, a disconnecting mechanism, an overvoltage protection component, and a thermal disconnector mechanism. The disconnecting mechanism includes an actuator member. The actuator member is selectively operable by a user to electrically disconnect the input cable connector from the output cable connector. The thermal disconnector mechanism is in a ready configuration. The thermal disconnector mechanism is operative to transition from the ready configuration to an actuated configuration responsive to overheating of the overvoltage protection component. The SPD assembly forms a first current path through the overvoltage protection component when the thermal disconnector mechanism is positioned in the ready configuration. The SPD assembly forms an alternate second current path bypassing the overvoltage protection component when the thermal disconnector mechanism is positioned in the actuated configuration.

According to some embodiments, the disconnecting mechanism includes a switch, and the actuator member is selectively operable by a user to electrically disconnect the input cable connector from the output cable connector via the switch.

In some embodiments, the SPD assembly includes a base and an SPD module configured to be mounted on the base, the base includes at least one base connector, and the SPD module includes at least one SPD module connector configured to electrically contact the at least one base connector when the SPD module is mounted on the base.

According to some embodiments, a surge protective device (SPD) assembly comprises: a plurality of SPD modules, each of the SPD modules having a window formed therein and the plurality of SPD modules being arranged, such that the windows formed therein, respectively, are axially aligned in a row; a transmitter assembly in a first one of the plurality of SPD modules at a first end of the row, the transmitter assembly being configured to transmit optical radiation through the windows formed in the plurality of SPD modules; a receiver assembly in a second one of the plurality of SPD modules at a second end of the row, the receiver assembly being configured to receive the optical radiation transmitted by the transmitter assembly; wherein the transmitter assembly is further configured to transmit a plurality of encoded messages via the optical radiation; and wherein the receiver assembly is configured to decode the plurality of encoded messages and to generate a notification indicating which of a plurality of states the surge protective device is in based on the decoding of the plurality of encoded messages.

In other embodiments, the plurality of states comprises none of the plurality of SPD modules have activated; at least one of the plurality of SPD modules has activated; and secondary optical radiation from a secondary source has penetrated the plurality of windows of the plurality of SPD modules.

In still other embodiments, each of the plurality of encoded messages comprises at least one bit and corresponds to a respective one of a plurality of known codewords; wherein the receiver assembly is further configured to compare each of the decoded messages with a corresponding one of the plurality of known codewords; and the receiver assembly is further configured to generate the notification based on comparing the plurality of decoded messages with the plurality of known codewords, respectively.

In still other embodiments, the receiver assembly is further configured to determine a number of bits that differ between the plurality of decoded messages and the plurality of known codewords, respectively, based on the comparing the plurality of decoded messages with the plurality of known codewords, respectively.

In still other embodiments, the plurality of known codewords has a plurality of bit thresholds associated therewith, respectively; and the receiver assembly is further configured to generate the notification that the surge protective device is in the none of the plurality of SPD modules have activated state when the number of bits that differ between the plurality of decoded messages and the plurality of known codewords, respectively, is less than the plurality of bit thresholds, respectively.

In still other embodiments, the plurality of known codewords has a plurality of bit thresholds associated therewith, respectively; and the receiver assembly is further configured to generate the notification that the surge protective device is in the at least one of the plurality of SPD modules has activated state when the number of bits that differ between at least one of the plurality of decoded messages and at least one of the plurality of known codewords, respectively, is not less than the plurality of bit thresholds, respectively.

In still other embodiments, the receiver assembly is further configured to generate the notification that the surge protective device is in the secondary optical radiation from the secondary source has penetrated the plurality of windows state when a number of consecutive bits in at least one of the plurality of decoded messages exceeds a repeating bit threshold.

In still other embodiments, the plurality of encoded messages comprises three encoded messages; a first one of the plurality of encoded messages comprises N bits, a second one of the plurality of encoded messages comprises 2N bits, and a third one of the plurality of encoded messages comprises 3N bits; and N is a positive integer.

In still other embodiments, the transmitter assembly is further configured to transmit each of the plurality of encoded messages at a frequency of about 40 bits/sec.

In still other embodiments, the transmitter assembly is further configured to delay about 5 seconds between transmitting respective ones of the plurality of encoded messages

### Brief Description of the Drawings

The accompanying drawings, which form a part of the specification, illustrate embodiments of the present invention.
**FIG. 1** is an exploded, perspective view of an SPD assembly according to some embodiments mounted on a DIN rail.
**FIG. 2** is a perspective view of the SPD assembly of **FIG. 1** mounted on the DIN rail.
**FIG. 3** is a schematic diagram representing an electrical circuit of the SPD assembly of **FIG. 1****.**
**FIG. 4** is a fragmentary, side view of the SPD assembly of **FIG. 1****.**
**FIG. 5** is a perspective view of a base module forming a part of the SPD assembly of **FIG. 1****.**
**FIG. 6** is a first side view of an electrical assembly forming a part of the base module of **FIG. 5****.**
**FIG. 7** is an opposing, second side view of the electrical assembly of **FIG. 6****.**
**FIG. 8** is a perspective view of a base contact forming a part of the base module of **FIG. 5****.**
**FIG. 9** is a first side view of an electrical assembly forming a part of an SPD module, which forms a part of the SPD assembly of **FIG. 1****.**
**FIG. 10** is an opposing, second side view of the electrical assembly of **FIG. 9****.**
**FIG. 11** is an exploded, fragmentary, perspective view of the SPD module.
**FIG. 12** is an enlarged, fragmentary, perspective view of a blade connector forming a part of the SPD module.
**FIG. 13** is a bottom perspective view of a thermal actuator forming a part of the SPD module.
**FIG. 14** is a top perspective view of a switch member forming a part of the thermal actuator of **FIG. 13****.**
**FIG. 15** is a bottom perspective view of the switch member of **FIG. 14****.**
**FIG. 16** is an enlarged, fragmentary, cross-sectional view of the base module.
**FIG. 17** is an enlarged, fragmentary, cross-sectional view of the of the SPD assembly of **FIG. 1****.**
**FIG. 18** is an enlarged, fragmentary, cross-sectional view of the of the SPD assembly of **FIG. 1****.**
**FIG. 19** is an enlarged, fragmentary, cross-sectional view of the of the SPD assembly of **FIG. 1** taken along the line **19-19** of **FIG. 18****.**
**FIG. 20** is an enlarged, fragmentary, cross-sectional view of the of the SPD assembly of **FIG. 1****.**
**FIG. 21** is an enlarged, fragmentary, cross-sectional view of the of the SPD assembly of **FIG. 1****.**
**FIG. 22** is an enlarged, fragmentary view of the of the SPD assembly of **FIG. 1****.**
**FIG. 23** is a perspective view of a data signal SPD system according to further embodiments.
**FIG. 24** is an exploded, perspective view of the data signal SPD system of **FIG. 23****.**
**FIG. 25** is a schematic diagram representing the data signal SPD system of **FIG. 23****.**
**FIG. 26** is an exploded, fragmentary, perspective view of an SPD module according to further embodiments.
**FIG. 27** is a fragmentary, side view of the SPD module of **FIG. 26****.**
**FIGS. 28** and **29** are a flowcharts illustrating operations for detecting activation of one or more SPD modules of an SPD assembly according to some embodiments.
**FIG. 30** is a waveform diagram illustrating an optical signal for transmission through windows in one or more SPD modules for detecting activation of one or more of the SPD modules according to some embodiments.

### Detailed Description of Embodiments of the Invention

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term a data processing system may include, but it is not limited to, a hardware element, firmware component, and/or software component.

As used herein, "monolithic" means an object that is a single, unitary piece formed or composed of a material without joints or seams. Alternatively, a unitary object can be a composition composed of multiple parts or components secured together at joints or seams.

Embodiments of the inventive concept are described herein with respect to surge protection for data communication cables. A "data communication cable" as used herein means any kind of medium configured to carry an electrical transmission signal, which is transmitted between two locations. The electrical transmission signal may embody binary data either directly and/or through modulation techniques, which are represented as a sequence of ones and zeros. Data communication cables may include, but are not limited to, twisted pair cables, coaxial cables, peripheral cables, *e.g.*, USB, networking cables, e.g, Ethernet, and inner communication cables, *e.g*., cables between hardware elements in a computer system.

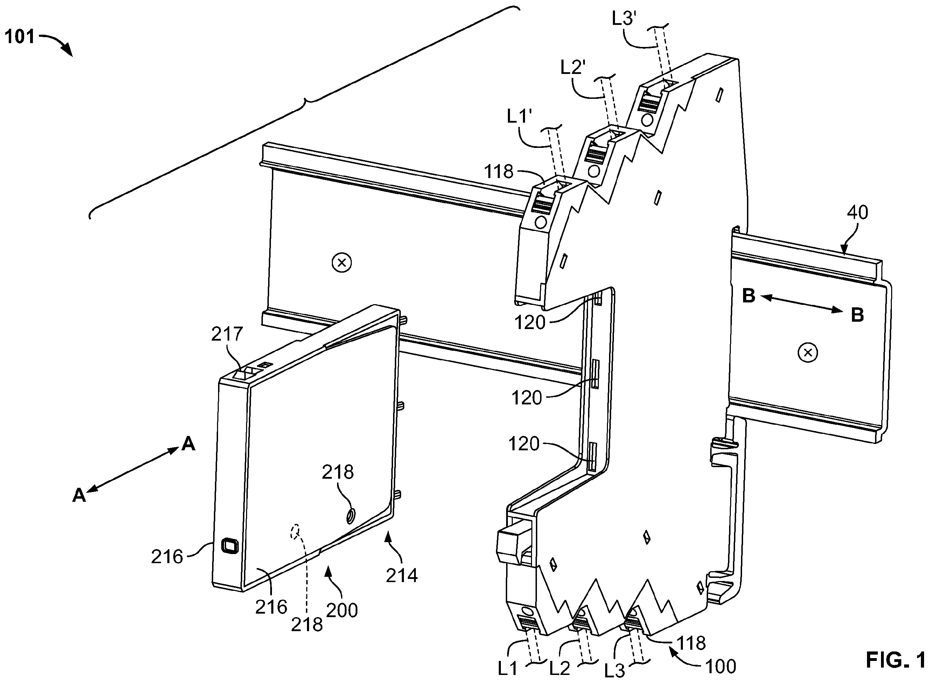

Referring to **FIGS. 1-22****,** a surge protective device (SPD) assembly **101** according to some embodiments of the inventive concept is shown therein. The SPD assembly **101** is modular and includes an SPD module **200** and a pedestal or base module **100.** The SPD module **200** is pluggable into and removable from the base module **100.** The SPD module **200** can be individually removed and replaced in the event an electrical component of the SPD module **200** fails.

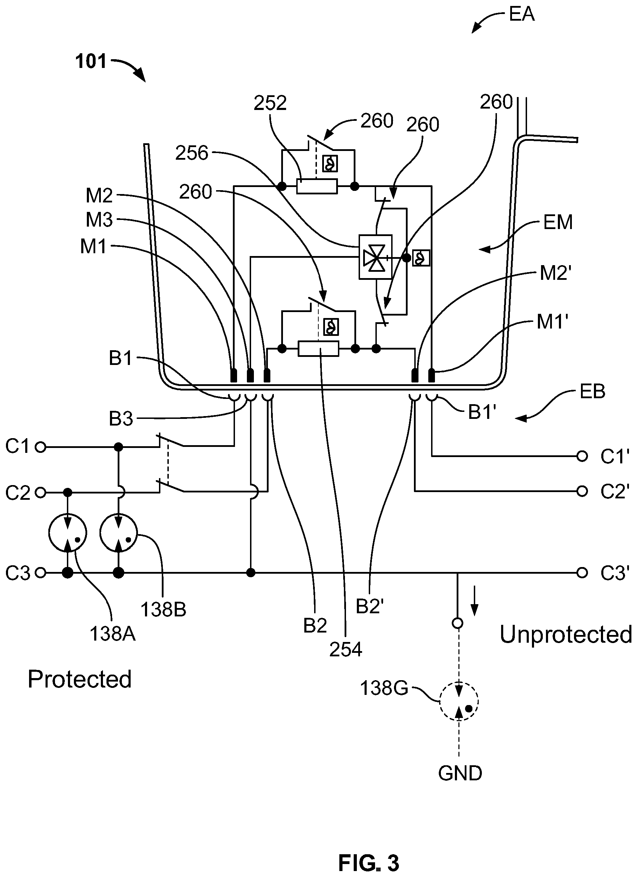

The SPD assembly **101** embodies an SPD circuit **EA (****FIG. 3****)** according to some embodiments including a base module circuit **EB** and an SPD module circuit **EM.** The SPD assembly **101** is adapted to receive and electrically connect input lines or cables **L1, L2, L3** and output lines or cables **L1', L2', L3'** with the base module circuit **EB,** and also with the SPD module circuit **EM** when the SPD module **200** is installed in the base module **100.** The SPD assembly **101** is also adapted to connect the SPD circuit **EA** to electrical ground **GND.** In some embodiments, the SPD assembly **101** connects the SPD circuit **EA** to electrical ground **GND** through a support rail **40.** The SPD circuit **EA,** the base module circuit **EB** and the SPD module circuit **EM** as illustrated and described are example circuits and other circuit configurations may be provided instead in accordance with embodiments of the technology.

In some embodiments, the SPD assembly **101** is used to transmit electrical data communications signals. In some embodiments, the input cables **L1, L2** are electrical data communications or signal input cables, and the output cables **L1', L2'** are corresponding data communications or signal output cables. The cables **L1, L2, L1', L2'** may include insulated wires.

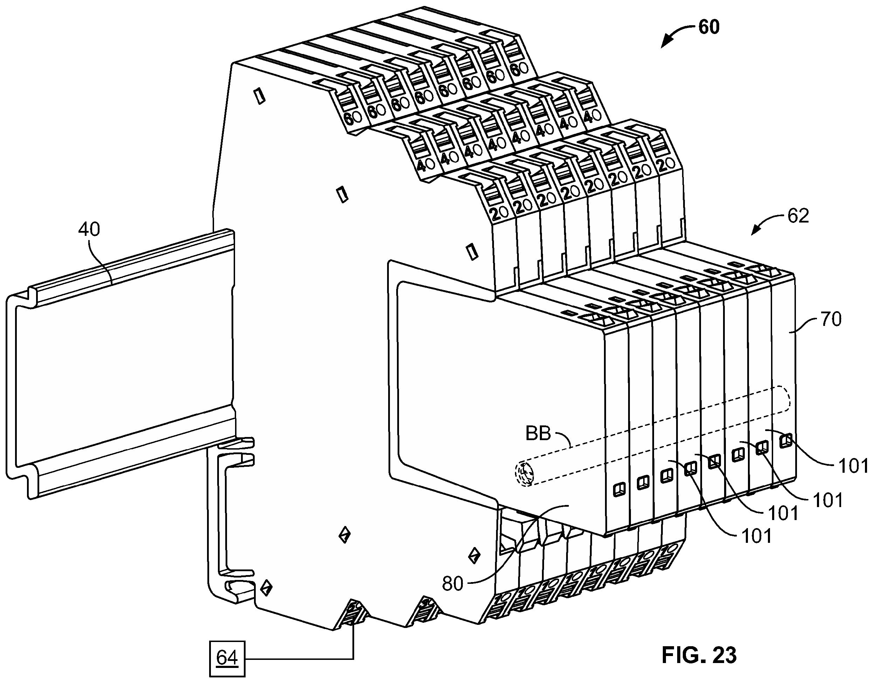

The SPD assembly **101** may be operatively combined with an optical monitoring system to monitor a state of the SPD assembly **101.** For example, the SPD assembly **101** may be used in a monitored SPD system **60 (****FIG. 23****).** The monitored SPD system **60** includes an optical monitoring system **62** including an optical transmitter **70,** an optical receiver **80,** and a remote monitoring device **64.**

The illustrated SPD assembly **101** is configured to be mounted on a DIN rail **40.** However, other mounting and protection configurations may be provided in accordance with some embodiments of the technology.

According to some embodiments and as shown, the SPD assembly **100** is configured, sized and shaped for mounting on a support rail **40.** According to some embodiments, the support rail **40** is a DIN (Deutsches Institut für Normung e.V.) rail shown in **FIG. 1** and is compliant with corresponding applicable DIN requirements or standards. According to some embodiments, the support rail **40** is a DIN top hat rail having a width of 35 mm and a depth of 7.5 mm. The DIN rail **40** has a lengthwise axis **B-B.** The DIN rail **40** may be secured (*e.g*., by screws or other fasteners) to a suitable support structure such as a wall, for example, a rear wall of an electrical service utility cabinet. The base module **100** is removably mountable on the DIN rail **40.** The pluggable SPD module **200** is in turn removably mountable on the base module **100.**

In some embodiments, the maximum dimensions of the SPD assembly **101** are compliant with DIN (Deutsches Institut für Normung e.V.) Standard: DIN EN 60715:2017. In some embodiments, the maximum dimensions of the assembly **100** are compliant with each of these standards.

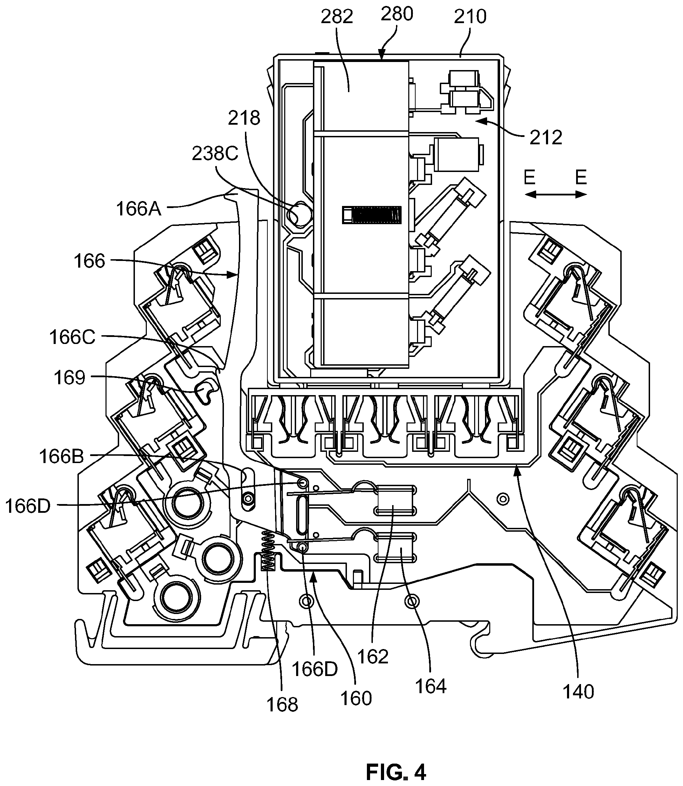

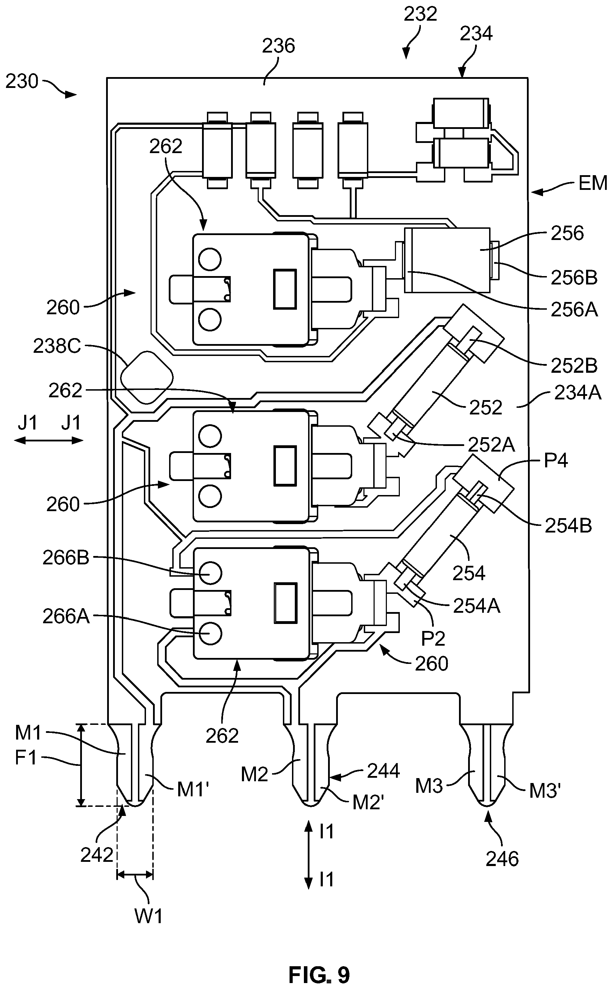

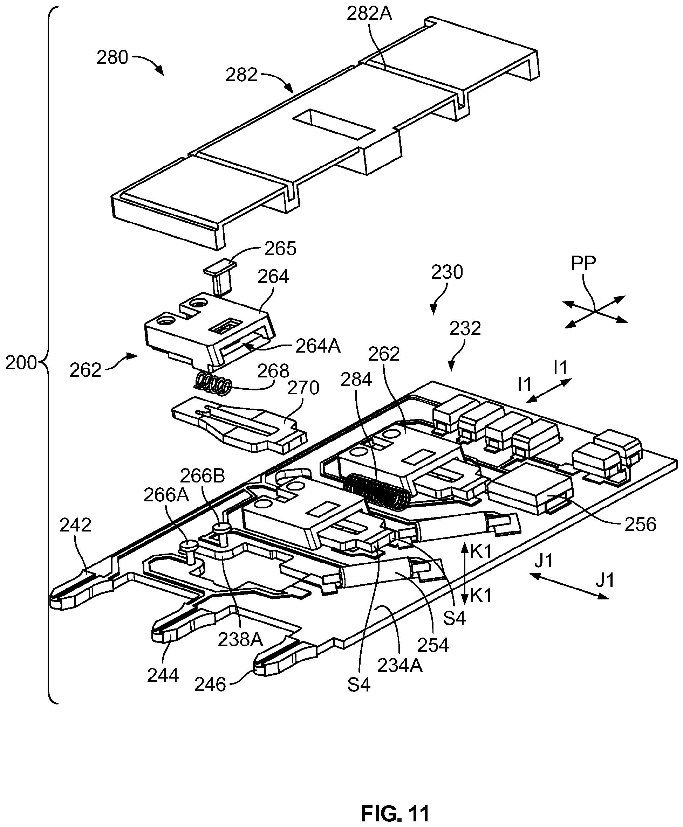

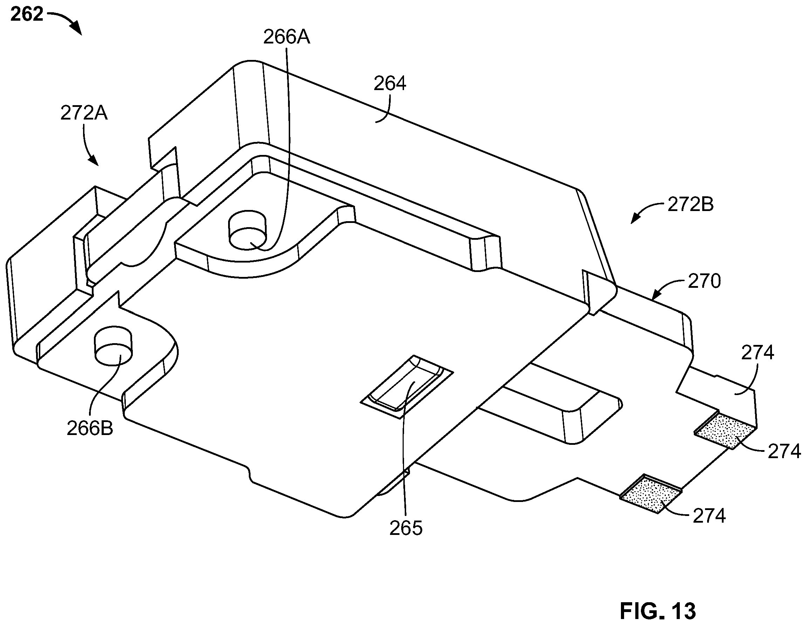

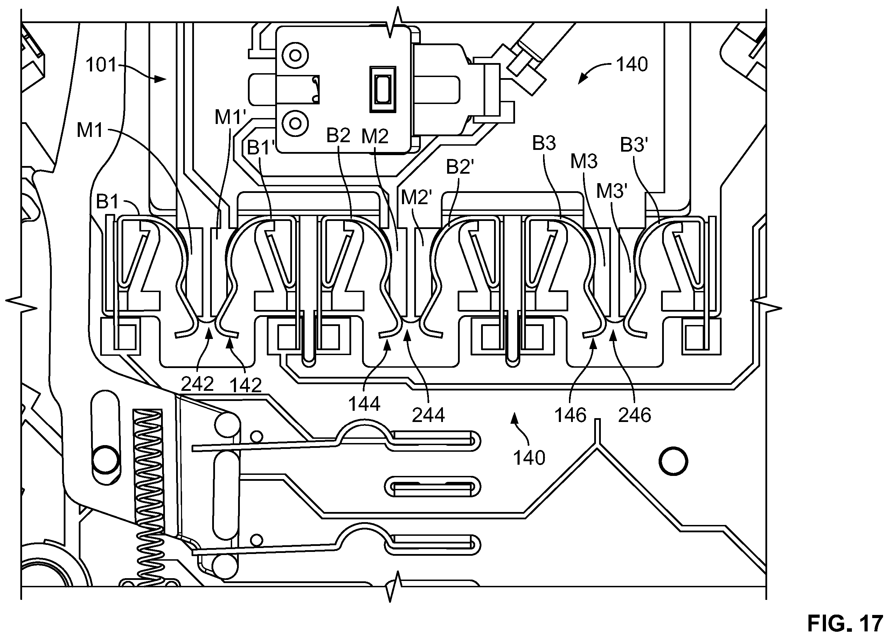

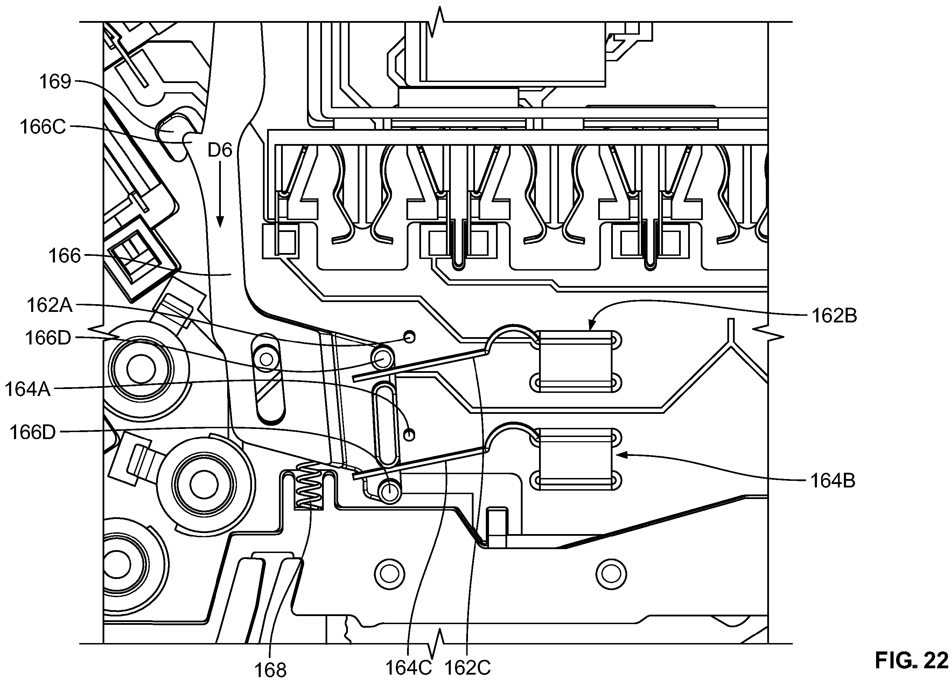

As discussed in more detail below, the SPD assembly **101** includes a blade connector system **140 (****FIGS. 4** and **17****),** a disconnecting mechanism **160 (****FIGS. 4** and **22****),** thermal disconnector mechanisms **260 (****FIGS. 9** and **13****),** and a status indicator mechanism **280 (****FIGS. 4** and **11****).**

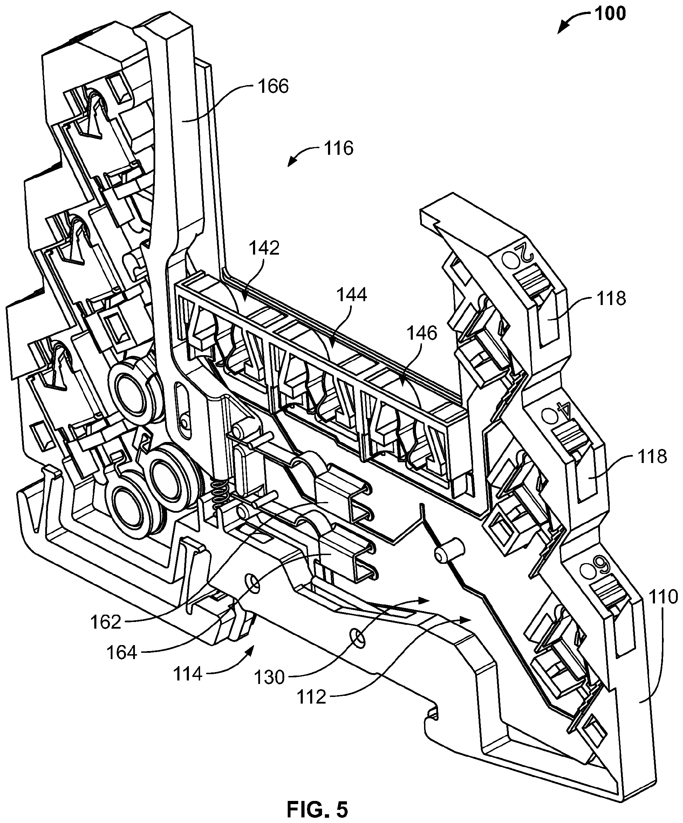

The base module **100 (****FIG. 5****)** includes a housing **110,** an electrical assembly **130,** and the disconnecting mechanism **160.** The base module **100** has a fore-aft or SPD module receiving axis **A-A (****FIG. 1****)** that extends transversely to and, in some embodiments, substantially perpendicular to the lengthwise axis **B-B** the DIN rail **40.**

According to some embodiments, the housing **110** is formed of an electrically insulating polymeric material. The housing **110** may be formed of any suitable material or materials. In some embodiments, the housing **110** is formed of a rigid polymeric material or metal (*e.g*., aluminum). Suitable polymeric materials may include polyamide (PA), polypropylene (PP), polyphenylene sulfide (PPS), or ABS, for example.

The base housing **110** defines an enclosed cavity **112** containing the electrical assembly **130.** A DIN rail receiver channel **114** is defined in the rear side of the base module **100.** Integral rail hook features may be located on one side of the channel **114** and a spring-loaded DIN rail latch mechanism may be mounted on the other side of the channel **114** to securely and releasably mount the base module **100** on a standard DIN rail as is known in the art. A module receiver seat or slot **116** is defined in the front side of the base module **100.** The receiver slot **116** is open from the front.

Cable ports **118** are defined on opposed upper and lower sides of the housing **110.** One cable port **118** is provided for each of the cables **L1, L2, L3, L1', L2', L3'.**

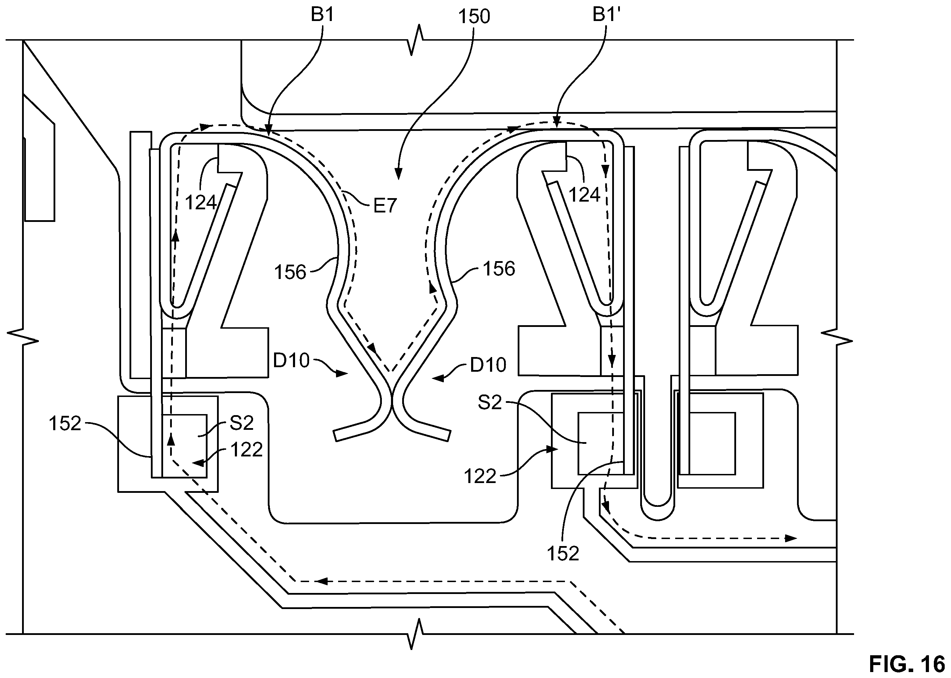

Three blade receiver slots **120 (****FIG. 1****)** are defined in the front side of housing **110** at the base of the receiver slot **116.** One blade receiver slot **120** is provided for each of the base connectors **142, 144, 146** discussed below. The housing **110** further includes a pair of opposed solder pads **122 (****FIG. 16****)** and a pair of opposed interlock features **124** in each blade receiver slot **120.**

The electrical assembly **130** includes a PCB assembly **132,** input cable connectors **C1, C2,** output cable connectors **C1', C2',** ground cable connectors **C3, C3',** a first base connector **142,** a second base connector **144,** a third or ground base connector **146,** and a ground contact **148.** The base module circuit **EB** is embodied in the electrical assembly **130.**

The PCB assembly **132** includes a PCB **134,** three gas discharge tubes (GDTs) **138A, 138B, 138G,** and a pair of disconnect switches **162, 164.** The PCB assembly **132** may include more or fewer GDTs in other embodiments.

The PCB **134** includes a PCB substrate **136** and a plurality or pattern(s) of electrically conductive (*e.g*., copper) layers laminated to the substrate and embodied in the PCB **134,** as is well known in the art. These electrically conductive layers may include electrically conductive traces, pads, vias, and/or plated through-holes, for example. While certain of these electrically conductive features are specifically mentioned in this description, it will be appreciated that the PCB **134** may include additional electrically conductive features to effect the electrical circuits represented in the figures and as needed to implement the functionality disclosed herein.

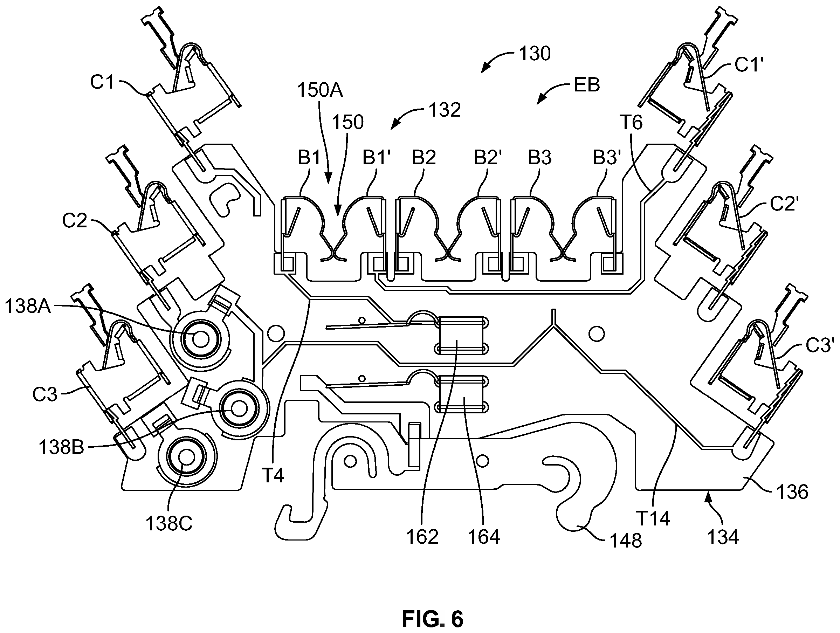

The first base connector **142** includes a base contact **B1** and a base contact **B1'.** The second base connector **144** includes a base contact **B2** and a base contact **B2'.** The ground base connector **146** includes a base contact **B3** and a base contact **B3'.** Each pair of contacts defines a connector slot **150** and an opening **150A** communicating with the connector slot **150 (****FIG. 6****).**

The base contacts **B1, B1', B2, B2', B3, B3'** may all be constructed and mounted in the housing **110** in the same manner. The base contact **B1** will be described in detail below; however, it will be appreciated that this description applies also to the other base contacts.

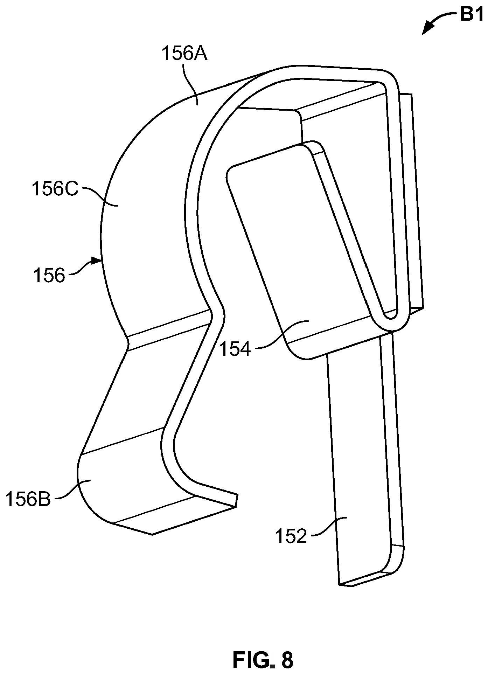

With reference to **FIGS. 8** and **16****,** the base contact **B1** includes an inner contact leg **152,** an interlock tab **154,** and a spring contact leg **156.** The spring contact leg **156** includes an entry section **156A,** an inner section **156B,** and an interlock section **156C.** The spring contact leg **156** is cantilevered from the contact leg **152** such that the spring contact leg **156** can be elastically deformed or deflected in directions **D10, D12** toward and away from the opposing base contact. The interlock section **156C** protrudes inwardly toward the slot **150.**

With reference to **FIG. 16****,** each base contact **B1, B1', B2, B2', B3, B3'** is mounted in its slot **120** such that its inner contact leg **152** is seated on or closely adjacent the associated solder pad **122** and its interlock tab **154** engages the adjacent housing interlock feature **124** to prevent or resist withdrawal of the base contact from its slot. Each inner contact leg **152** is secured in its solder pad **122** by a solder **S2.**

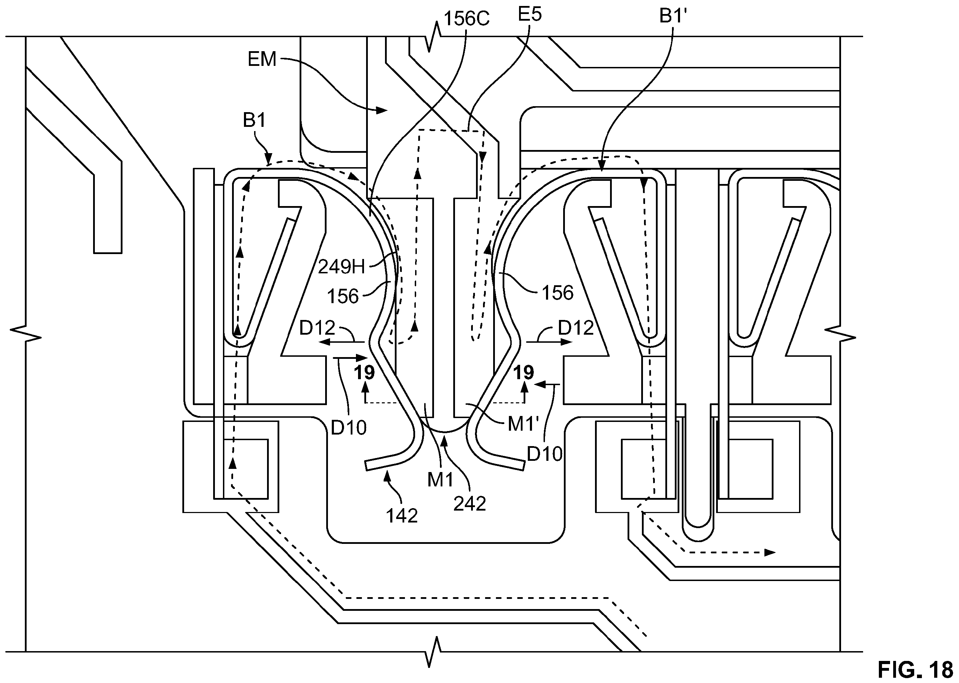

Generally, each base connector **142, 144, 146** is configured to assume an occupied or connecting position (*e.g*., as shown in **FIGS. 17** and **18****)** wherein a blade connector **242, 244, 246** is seated in the base connector **142, 144, 146,** and an unoccupied or non-connecting position (*e.g*., as shown in **FIG. 16****)** wherein no connector is seated in the base connector **142, 144, 146.** The blade connector system **140** includes the base connectors **142, 144, 146** and the blade connectors **242, 244, 246.**

Each base connector **142, 144, 146** is configured such that, in the non-connecting position, the opposing spring contact legs **156** of its contacts (*e.g*., **B1** and **B1')** contact one another (as shown in **FIG. 16****).** In some embodiments, the base connector is configured such that, in the non-connecting position, one or both of the spring contact legs **156** is elastically deflected and exerts a persistent compressive load (in directions **D10)** to force the opposing spring contact legs **156** to bear against one another.

The base contacts **B1, B1', B2, B2', B3, B3'** may be formed of any suitable material or materials. In some embodiments, the base contacts **B1, B1', B2, B2', B3, B3'** are formed of metal. In some embodiments, the base contacts **B1, B1', B2, B2', B3, B3'** are formed of resilient, elastically deflectable metal. Suitable metal materials may include nickel brass, CuSn 0.15, CuSN 6, CuP 0.008, for example. In some embodiments, each base contact **B1, B1', B2, B2', B3, B3'** is unitary and, in some embodiments, is monolithic.

With reference to **FIGS. 4** and **22****,** the disconnecting mechanism **160** includes a lever or actuator member **166,** a spring **168,** a latch feature **169** (*e.g*., integral with the housing **110),** a first disconnect switch **162,** and a second disconnect switch **164.**

The actuator member **166** includes a handle **166A,** a guide slot **166B,** a latch feature **166C,** and a pair of switch engagement features **166D.**

The first disconnect switch **162** includes an electrically conductive pin **162A** and a spring unit **162B** mounted and electrically connected to the PCB **134.** The second disconnect switch **164** includes an electrically conductive pin **164A** and a spring unit **164B** mounted and electrically connected to the PCB **134.** The pins **162A, 164A** may be inserted into and soldered to the PCB **134.**

The spring **168** biases the actuator member **166** toward and into the position shown in **FIG. 4****,** wherein spring legs **162C, 164C** of the spring unit **162B** and the spring unit **164B** electrically connect the spring unit **162B** and the spring unit **164B** to the pin **162A** and the pin **164A,** respectively (*i.e*., the switches are closed). In use, the operator can press the lever **166** in an opening direction **D6,** whereby the actuator member **166** displaces the spring legs **162C, 164C** out of contact with the pins **162A, 164A** to electrically disconnect the spring units **162B, 164B** from the pins **162A, 164A** (*i.e*., the switches are open), as shown in **FIG. 22****.**

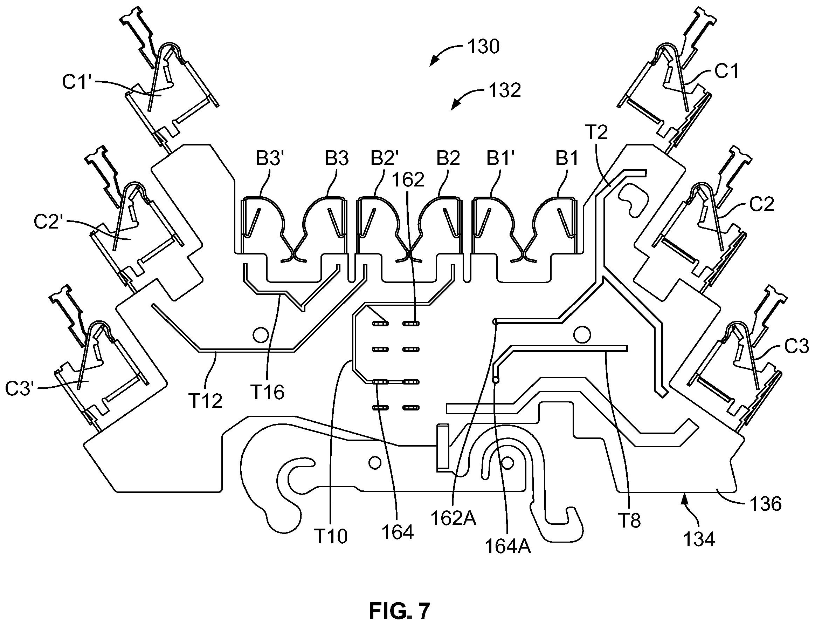

With reference to **FIGS. 6** and **7** (which show the right and left side faces of the PCB **134,** respectively), the electrical assembly **130** further includes: a trace **T2** from the connector **C1** to the pin **162A;** a trace **T4** from the switch **162** to the contact **B1;** a trace **T6** from the connector **C1'** to the contact **B1';** a trace **T8** from the connector **C2** to the pin **164A;** a trace **T10** from the switch **164** to the contact **B2;** a trace **T12** from the connector **C2'** to the contact **B2';** a trace **T14** from the connector **C3** to the connector **C3',** and a trace **T16** from trace **T14** to **B3** and **B3'.** The traces **T4, T6, T10, T12, T14, T16** are electrically connected to the base contacts **B1, B1', B2, B2', B3,** and **B3'** by the solders **S2.**

The SPD module **200** includes a module housing **210,** an electrical assembly **230,** and an indicator mechanism **280.** The SPD module circuit **EM** is embodied in the electrical assembly **230.**

The module housing **210 (****FIGS. 1** and **4****)** defines an enclosed cavity **212** containing the electrical assembly **230.** The module housing **210** has a rear end **214** and opposed sidewalls **216.** According to some embodiments, the housing **210** is formed of an electrically insulating polymeric material. The housing **210** may be formed of any suitable material or materials. In some embodiments, the housing **210** is formed of a rigid polymeric material or metal (*e.g*., aluminum). Suitable polymeric materials may include polyamide (PA), polypropylene (PP), polyphenylene sulfide (PPS), or ABS, for example.

With reference to **FIGS. 9-11****,** the electrical assembly **230** includes a PCB assembly **232.** The PCB assembly **232** includes a PCB **234.**

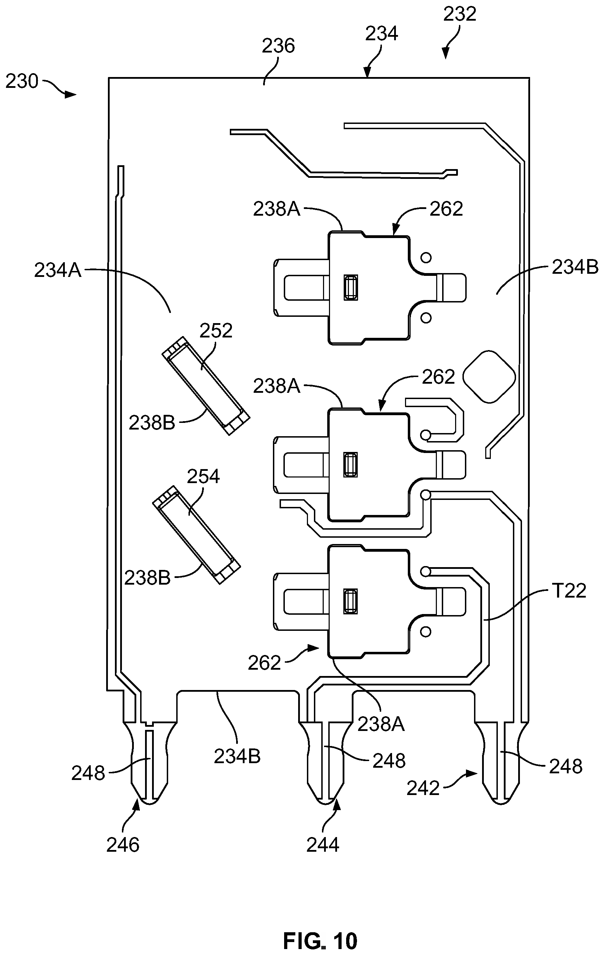

The PCB **234** is a substantially planar plate structure and has a substantially planar first side **234A (****FIG. 9****)** and an opposing, substantially planar second side **234B (****FIG. 10****).** The first side **234A** defines a main or fore-aft axis **I1-I1** and a lateral axis **J1-J1** perpendicular to the axis **I1-I1.** The axes **I1-I1, J1-J1** define a PCB plane **PP (****FIG. 11****).** The PCB **234** further has a thickness axis **K1-K1** perpendicular to each of the axes **I1-I1, J1-J1.** Openings **238A, 238B, 238C** are defined in the PCB **234** and extend fully through the substrate **236.** The PCB **234** includes a main section **234A** having an end edge **234B.**

The PCB **234** includes a PCB substrate **236** and a plurality or pattern(s) of electrically conductive (*e.g*., copper) layers laminated to the substrate and embodied in the PCB **234,** as is well known in the art. These electrically conductive layers may include electrically conductive traces, pads, vias, and/or plated through-holes, for example. While certain of these electrically conductive features are specifically mentioned in this description, it will be appreciated that the PCB **234** may include additional electrically conductive features to effect the electrical circuits represented in the figures and as needed to implement the functionality disclosed herein.

The PCB assembly **232** further includes a first blade connector **242,** a second blade connector **244,** and a third or ground blade connector **246,** each projecting rearwardly from the rear end **214.**

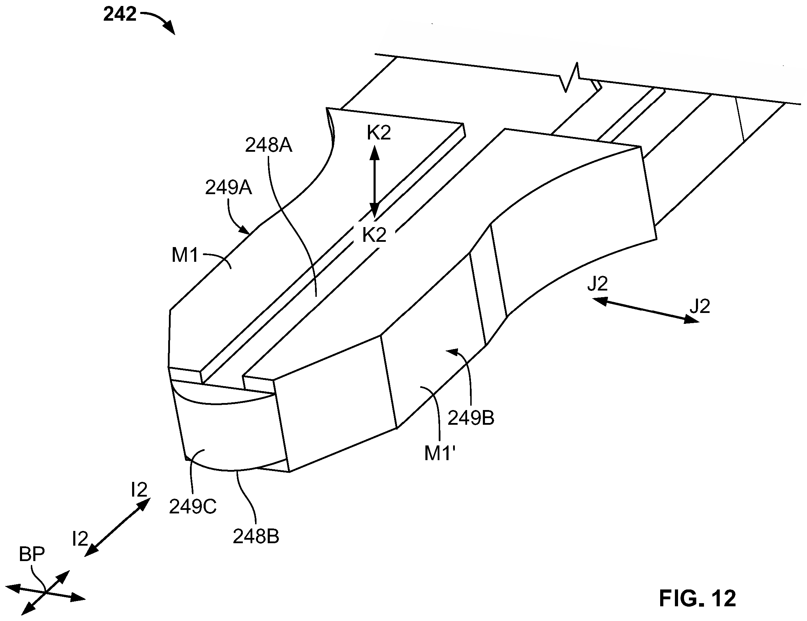

With reference to **FIG. 12****,** the blade connectors **242, 244, 246** may all be constructed in the same manner. The blade connector **242** will be described in detail below; however, it will be appreciated that this description applies also to the other blade connectors **244, 246.**

With reference to **FIG. 12****,** the blade connector **242** includes a blade tab **248.** The blade tab **248** projects or extends from the end edge **234B** of the main section **234A** along the fore-aft axis **I1-I1.** In some embodiments, each blade tab **248** is an integral part of the substrate **236.** For example, the substrate **236** may be a single piece that is cut or formed in the shape of the main section **234A** and the three tabs **248,** which together form a single rigid component. Accordingly, the blade tabs **248** may form integral parts of the PCB **234** extending from an end edge **234B** of the PCB main section **234A** that supports the electrical components **252-256** and other elements of the SPD module circuit **EM.**

The tab **248** is a substantially planar plate structure and has a substantially planar first side **248A** and an opposing, substantially planar second side **248B.** The first side **248A** defines a main or fore-aft axis **I2-I2** (parallel with the axis **I1-I1),** and a lateral axis **J2-J2** (parallel with the axis **J1-J1)** perpendicular to the axis **I2-I2.** The axes **I2-I2, J2-J2** define a blade connector plane **BP (****FIG. 12****).** The tab **248** further has a thickness axis **K2-K2** perpendicular to each of the axes **I2-I2, J2-J2.**

The blade connector **242** has a leading or distal end **249C,** a first lateral or left side edge **249A,** and an opposing second lateral or right side edge **249B.** Each side edge **249A, 249B** has a laterally inward extending recess **249H** in its midsection to form opposed interlock features.

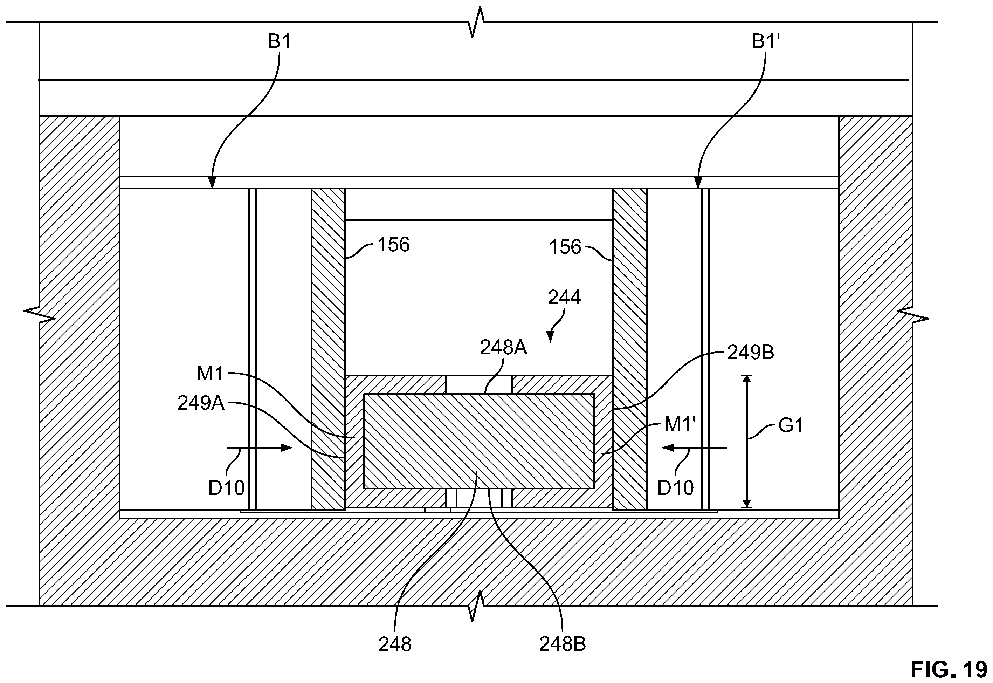

Each blade connector **242, 244, 246** has a maximum width **W1 (****FIG. 9****;** along axis **J2-J2),** a length **F1** (along axis **I2-I2),** and a thickness **G1 (****FIG. 19****;** along axis **K2-K2).** The thickness dimension **G1** is less than the width dimension **W1** and is less than the length dimension **F1.** In some embodiments, the width dimension **W1** and the length dimension **F1** are each at least two to five times the thickness dimension **G1.**

Each blade connector **242, 244, 246** has a pair of opposed electrically conductive contact layers mounted or secured on its opposed side edges **249A, 249B.** An input contact layer **M1** is located on the left side edge **249A** of the first blade connector **242,** and an output contact layer **M1'** is located on the right side edge **249A** of the blade connector **242.** An input contact layer **M2** is located on the left side edge **249A** of the second blade connector **244,** and an output contact layer **M2'** is located on the right side edge **249A** of the blade connector **244.** An input contact layer **M3** is located on the left side edge **249A** of the third blade connector **246,** and an output contact layer **M3'** is located on the right side edge **249A** of the blade connector **246.**

The contact layers **M1, M1', M2, M2', M3, M3'** may be formed in any suitable manner. In some embodiments, the **M1, M1', M2, M2', M3, M3'** are formed on the PCB substrate tabs **248** by PCB etching. In some embodiments, the **M1, M1', M2, M2', M3, M3'** are formed on the PCB substrate tabs **248** using a plating or metallizing technique.

The contact layers **M1, M1', M2, M2', M3, M3'** may be formed of any suitable electrically conductive material. In some embodiments, the **M1, M1', M2, M2', M3, M3'** are formed of metal. In some embodiments, the **M1, M1', M2, M2', M3, M3'** are formed of copper or copper with tin, gold or nickel plating.

With reference to **FIGS. 9-11****,** the PCB assembly **232** further includes a first electrical component **252,** a second electrical protection component **254,** a third electrical component **256,** and three thermal disconnectors **260.** Each thermal disconnector **260** includes a thermal actuator **262.**

The electrical components **252, 254** are mounted in respective ones of the PCB openings **238B.** The electrical component **256** is surface mounted on the PCB **234.** The thermal actuators **262** are mounted in respective ones of the PCB openings **238A.**

With reference to **FIG. 9****,** the first electrical component **252** includes a first electrical terminal **252A** and a second terminal **252B.** The second electrical component **254** includes a first electrical terminal **254A** and a second terminal **254B.** The third electrical component **256** includes a first electrical terminal **256A** and a second terminal **256B.** While three electrical components are shown for the purpose of illustration, the SPD module **200** may include more or fewer electrical components.

The electrical components **252-256** may be any suitable type and construction of electrical component. Each electrical component **252-256** may be a passive electrical component or an active electrical component. In some embodiments, one or more of the electrical components **252-256** is or includes an overvoltage protection component. In the illustrated embodiment of **FIGS. 9-11****,** the electrical components **252, 254** are electrical resistors and the electrical component **256** is an overvoltage protection component. However, the PCB assembly **232** may include more or fewer electrical components in different combinations (*e.g*., multiple overvoltage protection components) each protected by a respective thermal disconnector **260.**

The overvoltage protection component **256** (as well as any additional overvoltage protection components) may be a passive overvoltage protection component or an overvoltage protection electrical component. In some embodiments, the overvoltage protection component **256** is or includes an overvoltage clamping element. In some embodiments, the overvoltage protection component **256** is or includes a varistor (*e.g*., a metal-oxide varistor (MOV)). In some embodiments, the overvoltage protection component **256** is or includes a diode. In some embodiments, the diode is a transient-voltage-suppression (TVS) diode. In some embodiments, the overvoltage protection component **256** is or includes a voltage-responsive switching component. In some embodiments, the overvoltage protection component **256** is or includes a GDT. In the illustrated embodiment of **FIGS. 9-11****,** the overvoltage protection component **256** is a TVS diode.

A respective one of the thermal disconnector mechanisms **260** is associated with each of the electrical components **252, 254, 256.** The thermal disconnector mechanisms **260** may all be constructed in the same manner. The thermal disconnector mechanism **260** paired with and protecting the electrical component **254** will be described in detail below. However, it will be appreciated that this description applies also to the thermal disconnector mechanisms **260** paired with the other electrical components **252, 256.**

With reference to **FIGS. 11** and **13****-15,** the thermal disconnector mechanism **260** includes a thermal actuator **262.** The thermal actuator **262** includes an actuator body **264,** a spring pin **265,** a pair of spaced apart electrically conductive electrically conductive switch contacts or bypass contacts **266A, 266B,** an actuator spring **268,** and a switch member **270.**

In some embodiments and as shown, the bypass contacts **266A, 266B** are electrically conductive pins mounted on the PCB **234.** The electrically conductive pins **266A, 266B** are laterally spaced apart and fixedly mounted on the PCB **234.** The electrically conductive pins **266A, 266B** are electrically connected to the PCB **234** as discussed below. The pins **266A, 266B** may be formed of any suitable material. In some embodiments, the pins **266A, 266B** are formed of metal. Suitable metals may include CuSn6, Cu, or CuZn37, optionally with additional tin, gold of nickel coating).

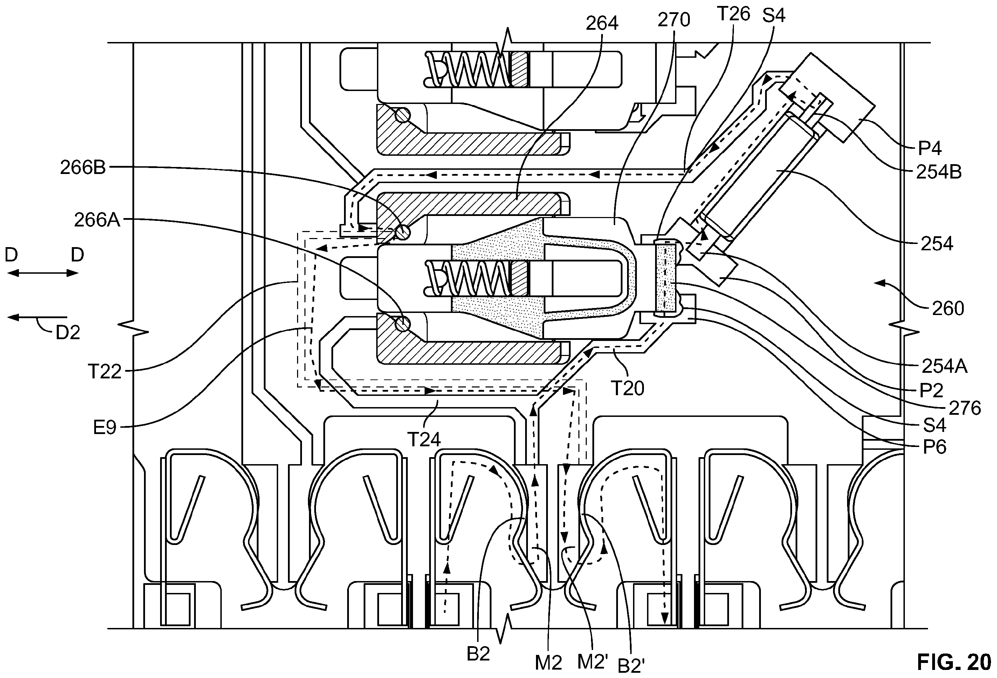

The actuator body **264** is formed of an electrically insulating material. In some embodiments the actuator body **264** is formed of plastic. A guide channel **264A** is defined in the body **264.** The switch member **270** is slidably mounted in the guide channel **264A** to slidably translate along an axis **D-D (****FIG. 20****).** The spring **268** is compressed between the spring pin **265** and the switch member **270** and loads or biases the switch member **270** to translate forwardly, toward the conductive pins **266A, 266B,** in an actuator release direction **D2 (****FIG. 20****).**

The switch member **270** includes a body **272,** a front electrically conductive portion or layer **274,** and a rear electrically conductive portion or layer **276.**

The body **272** has a front end **272A,** an opposing rear end **272B,** a guide slot **272C (****FIG. 20****),** a pair of laterally opposed front contact surfaces **273A,** and a pair of laterally spaced apart rear contact surfaces **273B.** The spring pin **265** is slidably received in the guide slot **272C.** The body **272** is formed of an electrically insulating material. In some embodiments the body **272** is formed of plastic.

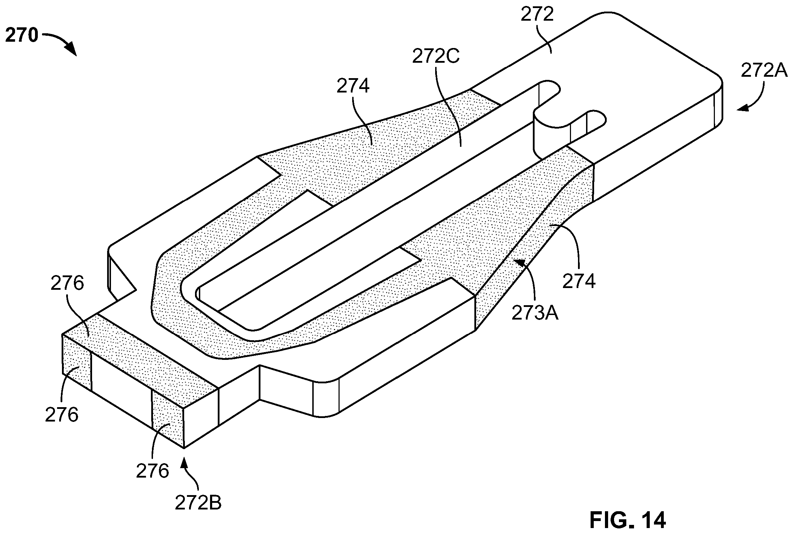

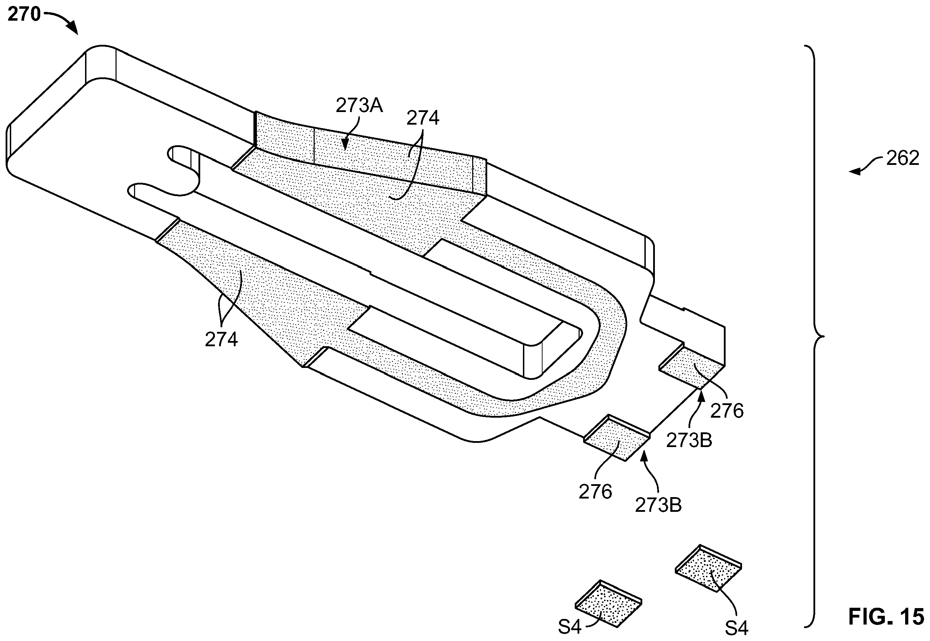

The front electrically conductive layer **274** covers and electrically connects the opposed front contact surfaces **273A.** The rear electrically conductive layer **276** covers and electrically connects the rear contact surfaces **273B.** The portions of the conductive layer **276** shown on the lower regions **273B** as shown in **FIG. 15** are electrically connected to one another by the portions of the conductive layer **276** shown on the upper and end wall regions **273B** as shown in **FIG. 14****.** The electrically conductive layers **274, 276** may be formed of any suitable material. In some embodiments, the layers **274, 276** are formed of metal. Suitable metals may include copper.

With reference to **FIG. 20****,** the thermal disconnector mechanism **260** further includes a component input terminal pad **P2, a** component output terminal pad **P4,** a thermal actuator pad **P6,** a trace **T20** from contact **M2** to pad **P6,** a trace **T22** (on the opposing side of the PCB; shown in dashed lines in **FIG. 20****)** from contact **M2'** to pin **266B,** a trace **T24** from contact **M2** to pin **266A,** and a trace **T26** from pin **266B** to pad **P4,** and solders **S4** on the pads **P2** and **P6.** More particularly, the solders **S4** mechanically secure and electrically connect the rear electrically conductive layer **276** to the pad **P2** and the pad **P6.**

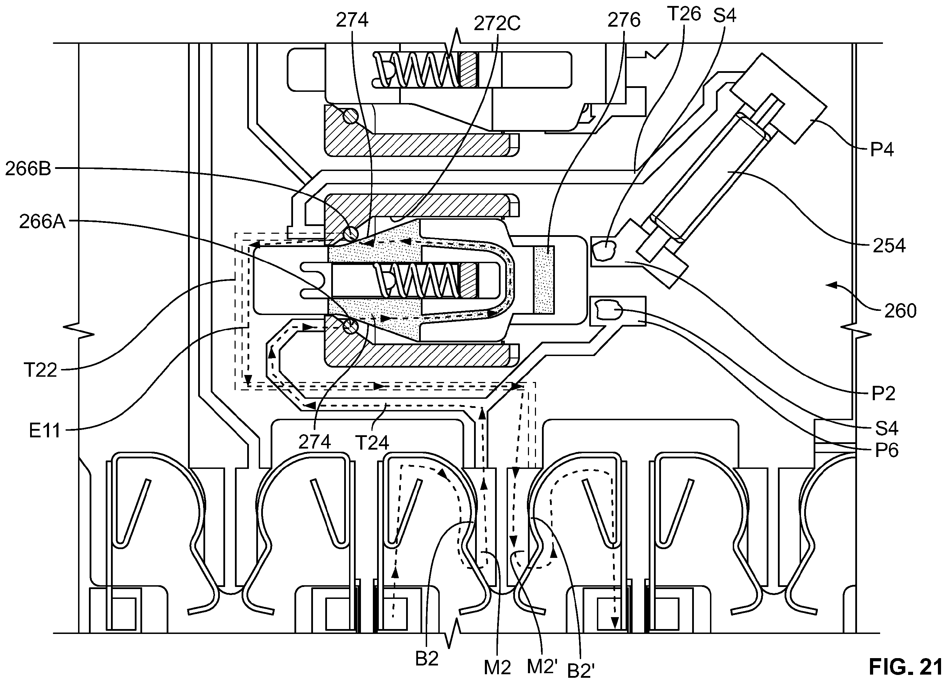

The thermal disconnector mechanism **260** is initially provided in a ready configuration as shown in **FIGS. 9** and **20****.** In the ready configuration, the switch member **270** is held in a ready position relative to the body **264** by the solders **S4** on the pads **P2, P6.** When sufficient heat is applied to the solders **S4,** the solders **S4** will melt and the spring **268** will forcibly move, displace or force the switch member **270** into an extended or displaced position, whereby the thermal disconnector mechanism **260** assumes an actuated configuration (as shown in **FIG. 21****).** In the ready configuration, the rear conductive layer **276** electrically connects the pad **P2** to the pad **P6.** In the actuated configuration, the front conductive layer **274** electrically connects the pin **266A** to the pin **266B.**

The indicator mechanism **280** includes an indicator member **282 (****FIGS. 4** and **11****),** window openings **218 (****FIG. 1****)** in each of the housing side walls **216,** an indicator window **217 (****FIG. 1****)** in the front wall of the housing **210,** and a spring **284.** In some embodiments, the window openings **218** are uncovered, so the housing cavity **212** is open.

The indicator member **282** is formed of an electrically insulating material (*e.g*., plastic). Guide channels **282A** are defined in the indicator member **282.** The indicator member **282** is slidably mounted in the housing **210** to slidably translate along an axis **E-E (****FIG. 4****).** In a ready position as shown in **FIG. 4****,** the spring **284** is compressed between a spring post and the indicator member **282** and loads or biases switch member **270** rearwardly, away from the window openings **217, 218.**

The indicator member **282** is positioned relative to each of the thermal disconnector mechanisms **260** such that, when a disconnector mechanism **260** is actuated and the switch member **270** thereof is released in the direction **D2,** the spring-loaded switch member **270** will force the indicator member **282** to translate in the direction **D2** to an indicating position. In the indicating position, the indicator member **282** covers or blocks the window openings **217, 218.**

The SPD assembly **101** may be used as follows in accordance with methods of the present invention.

Generally, the GDTs **138A, 138B, 138C** in the base **100** provide primary (input) surge protection, and the overvoltage protection component **256** (*e.g*., TVS diode) in the SPD module **200** provides secondary (output) surge protection for the connected the cables **L1, L1', L2, L2', L3,** and **L3'.** The resistors **252** and **254** serve as a connection elements for the lines, and also as energy coordination elements ensuring the timely triggering of the base GDTs **138A, 138B, 138C** and limiting the surge let-through energy to the TVS diode **256.**

In use, the base module **100** is mounted on the DIN rail **40** as shown in **FIG. 1****.** The ground contact **148** electrically contacts the grounded DIN rail **40,** thereby connecting the base circuit **EB** to electrical ground **GND.**

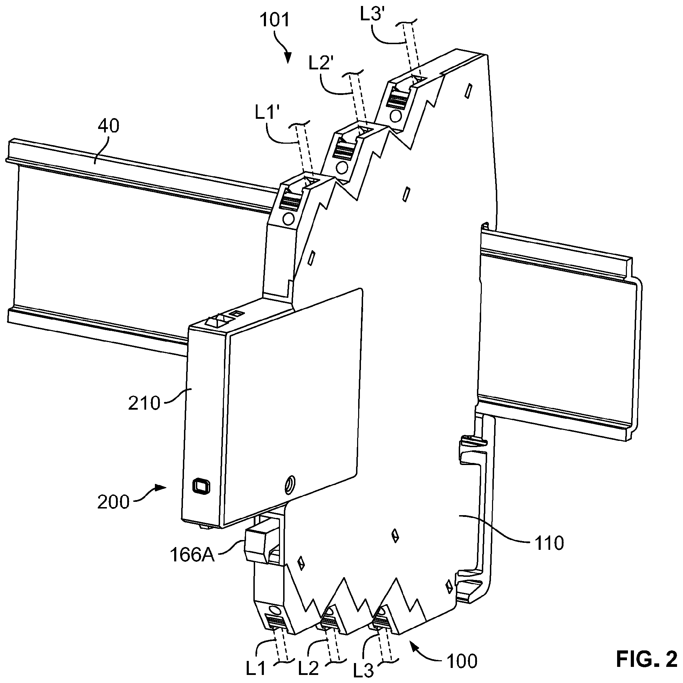

Cables **L1, L1', L2, L2', L3, L3'** (shown in dashed line in **FIGS. 1** and **2****)** are inserted through the cable ports **118** of the base module **100** as shown and secured by the respective connectors **C1, C1', C2, C2', C3, C3'.** The connectors **C1, C1', C2, C2', C3, C3'** electrically connect the cables **L1, L1', L2, L2', L3,** and **L3',** respectively, to the base circuit **EB.**

The SPD module **200** is axially plugged or inserted into the receiver slot **116** in an insertion direction along the axis **A-A** through the front opening of the base **100,** as shown in **FIGS. 2** and **4****.** The SPD module **200** is pushed back into the receiver slot **116** until the blade connectors **242, 244, 246** of the SPD module **200** are received in the slots **120** and the base connectors **142, 144, 146,** respectively, as shown in **FIGS. 4** and **17****.**

The matings between the blade connectors **242, 244, 246** and the base connectors **142, 144, 146,** respectively, may each be accomplished, configured and operate in substantially the same manner. Accordingly, the mating of the blade connector **242** to the base connector **142** will be described in detail. This description likewise applies to the other connectors **144, 146, 244, 246.**

As the blade connector **242** enters the slot **150** of the base connector **142,** the blade connector **242** deflects the spring contact legs **156** of the base contacts **B1, B1'** in laterally outward directions **D12 (****FIG. 18****).** When the blade connector **242** is fully seated (as shown in **FIG. 18****)** the interlock sections **156C** are seated in the interlock recesses **249H.** In the fully seated position, the spring contact legs **156** are elastically deformed or deflected in the outward directions **D12** so that the spring contact legs **156** exert a persistent compressive load (in directions **D10)** to force the spring contact legs **156** to bear against the contact layers **M1, M1'.**

More particularly, the spring contact leg **156** of the base contact **B1** engages and electrically contacts the input contact layer **M1,** and the spring contact leg **156** of the base contact **B1'** engages and electrically contacts the input contact layer **M1'.** As shown in **FIG. 19****,** the spring contact legs **156** engage the laterally opposed lateral side edges **249A, 249B** of the blade connector **242** (which are spaced apart along the lateral axis **J2-J2),** and apply force in the lateral directions **D10.** That is, the spring contact legs **156** engage and load the narrow side edges **249A, 249B** of the contact layers **M1, M1'** along an axis parallel to the plane **PP** of the PCB **234,** rather than engaging the broad front and rear faces of the blade connector **242** and applying loads orthogonal to the plane **PP** of the PCB **234.**

The interlocks between the interlock sections **156C** and the recesses **249H** and the spring loading of the spring contact legs **156** serve to lock the blade connector **242** in the base connector **142.** This locking engagement may resist or prevent the SPD module **200** from falling out of the base module **100** due to vibration, etc.

The SPD module **200** can be released and removed from the base module 100 by executing a reverse of the foregoing procedure. It will be appreciated that, in order to remove the SPD module **200** the user must apply a withdrawal force sufficient to deflect the spring contact legs **156** to disengage the interlocks between the base contacts **B1, B1', B2, B2', B3, B3'** and the blade connectors **242, 244, 246.**

The foregoing steps of mounting and removing the SPD module **200** or other suitably configured modules in and from the base module **100** can be repeated multiple times. For example, in the event that an electrical component **252, 254, 256, 258** of the SPD module **200** is degraded or destroyed or no longer of proper specification for the intended application, the SPD module **200** can be replaced with a fresh or suitably constructed module.

The blade connector system **140** has two modes of operation, an SPD module-in mode and an SPD module-out mode. In the SPD module-in mode, the SPD module **200** is mounted on the base module **100** with the blade connectors **242, 244, 246** mated with the base connectors **142, 144, 146** as discussed above and shown in **FIGS. 17** and **18****.** In the SPD module-out mode, the blade connectors **242, 244, 246** are not mated with the base connectors **142, 144, 146,** as shown in **FIG. 16****.** Each pair of connectors **142** and **242, 144** and **244, 146** and **246** will operate in the same manner. Accordingly, it will be appreciated that the description below with regard to the connectors **142** and **242** likewise applies to the connectors **144** and **244, 146** and **246.**

In the SPD module-in mode, the contact **B1** engages the contact **M1,** and the contact **B1'** engages the contact **M1',** as shown in **FIG. 18****.** As a result, the SPD assembly **101** forms a current path **E5 (****FIG. 18****)** that extends sequentially through the cable connector **C1,** the base contact **B1,** the SPD module contact **M1,** the **SPD** module circuit **EM,** the SPD module contact **M1',** the base contact **B1',** and the cable connector **C1'.** Accordingly, in this configuration the data signal lines **L1, L1'** are connected and the electrical current travels, via the base module **100,** through the SPD module circuit **EM** to protect the connected lines **L1, L1'.**

In the SPD module-out mode, the base contacts **B1** and **B1'** engage and electrically contact one another, as shown in **FIG. 16****.** As a result, the base module **100** forms a current path **E7 (****FIG. 16****)** that extends sequentially through the cable connector **C1,** the base contact **B1,** the base contact **B1',** and the cable connector **C1'.** Accordingly, in this configuration the data signal lines **L1, L1'** are connected and the electrical current travels, via the base module **100,** from the cable connector **C1** to the cable connector **C1',** without traveling through the SPD module circuit **EM.** As a result, the data signal lines **L1, L1'** will remain electrically connected even when the SPD module **200** is not installed (*e.g*., when the SPD module **200** is removed for replacement with a new the SPD module **200).**

The thermal disconnectors **260** protect the diode **256** and also the resistors **252, 254** . Each of the electrical components **252, 254, 256** may become overheated in service. Each thermal disconnector mechanism **260** of the SPD module **200** has two modes of operation depending on the state of the associated electrical component **252, 254, 256, 258.** Each thermal disconnector mechanism **260** will operate in the same manner. Accordingly, it will be appreciated that the description below with regard to the electrical component **254** and its thermal disconnector mechanism **260** likewise applies to the other electrical components **252, 256.**

During normal operation (referred to herein as Mode 1), the SPD module **200** operates as an overvoltage protected circuit between contact **M2** and contact **M2'.** With reference to **FIG. 20****,** the thermal disconnector mechanism **260** remains in its ready configuration (with the switch member **270** in its ready position). As a result, the current from the base module **100** travels a current path **E9** extending sequentially from the base contact **B2** to the module contact **M2,** through the trace **T20** from the contact **M2** to the pad **P6,** through the solders **S4** and rear conductive layer **276** to the pad **P2,** through the electrical component **254** to the pad **P4,** through the trace **T26** from the pad **P4** to the conductive pin **266B,** through the trace **T22** from the pin **266B** to the contact **M2',** and through the contact **M2'** to the base contact **B2'.** Accordingly, in this configuration the data signal current is routed along a current path through the electrical component **254,** and the SPD module **200** operates as an overvoltage protected circuit between connector **C2** and connector **C2'.**

In Mode 2, the thermal disconnector mechanism **260** operates as a fail-safe mechanism and/or indicator actuator mechanism by moving into its actuated configuration. In use, the overvoltage protection component **254** may overheat or generate excessive heat as a result of failure or otherwise. The heat may build up over an extended time period or a relatively brief time period. The heat from the overvoltage protection component **254** is thermally transferred to the solders **S4** on the pads **P2** and **P6.** Once sufficient heat has accumulated (a threshold or trigger heat) in the solders **S4,** the solders **S4** will melt, thereby triggering the thermal actuator **262.** The melted solders **S4** will release the spring-loaded switch member **270,** which permits the switch member **270** to translate in the direction **D2** under the force of the spring **268** until the front end of the switch member contacts the pins **266A, 266B.** The rear conductive layer **276** of the switch member **270** is thereby pulled away from and out of electrical contact with the pads **P2** and **P6,** and the front conductive layer **274** of the switch member **270** is thereby put in electrical contact with the pins **266A, 266B,** as shown in **FIG. 21****.**

As a result, the current from the base module **100** travels a current path **E11** extending sequentially from the base contact **B2** to the module contact **M2,** through the trace **T24** from the module contact **M2** to the pin **266A,** through the front conductive layer **274** to the pin **266B,** through the trace **T22** from the pin **266B** to the contact **M2',** and through the contact **M2'** to the base contact **B2'.** Accordingly, in this configuration the data signal current is routed through the SPD module **200,** but the electrical component **254** is bypassed.

The release of the switch member **270** as described above (by actuation of any of the thermal actuators **262)** also actuates the indicator mechanism **280.** The displaced switch member **270** pushes the indicator member **282** in the direction **D2** from the ready position **(****FIG. 4****)** to an alert position. In the alert position, an indicator surface of the indicator member **282** is aligned with and covers or blocks the openings **218, 238C.**

In some embodiments, the indicator surface has a noticeably different visual appearance through the windows openings **218, 238C** than the housing indicator surface, providing a visual alert or indication so that an operator can readily determine that the alert mechanism has been activated. For example, the housing indicator surface and the indicator member surface may have distinctly different colors (*e.g*., green versus red). In this manner, the indicator mechanism **280** can provide a convenient indication that the SPD module **200** has assumed a failed state.

In some embodiments, the displaced indicator member **282** blocks the path of an optical beam of an optical monitoring system (*e.g*., as described below).

The disconnecting mechanism **160** may be used as follows. The operator can position the disconnecting mechanism **160** in each of a connecting position **(****FIG. 4****)** and a disconnecting position **(****FIG. 22****).**

The disconnecting mechanism **160** is maintained in the connecting position by the spring **168,** which pushes the actuator member **166** outward (*i.e*., in the direction opposite the direction **D6)** to a ready position. In the ready position, the actuator member **166** permits the spring legs **162C** and **164C** to engage their respective pins **162A** and **162B.** As a result, the cable connector **C1** is electrically connected to the base contact **B1** through the switch **162,** and the connector **C2** is electrically connected to the base contact **B2** through the switch **164.**

When desired, the operator can place the disconnecting mechanism **160** in the disconnecting position by pushing (using the handle **166A)** the actuator member **166** in the inward direction **D6** against the spring **168.** The actuator member **166** (via the switch engagement features **166D)** forces the spring legs **162C** and **164C** away from and out of electrical engagement with their respective pins **162A** and **162B.** As a result, the cable connector **C1** is electrically disconnected from the base contact **B1** by the open switch **162,** and the connector **C2** is electrically disconnected from the base contact **B2** by the open switch **164.**

The actuator member **166** is locked in the disconnecting position by an interlocking engagement between the housing feature **169** and the latch feature **166C.** The disconnecting mechanism **160** can be returned to the connecting position by pressing and releasing the actuator member **166.**

According to some embodiments and as illustrated, the disconnecting mechanism **160,** when placed in the disconnecting position, does not electrically disconnect the cable connector **C3** or the cable connector **C3'** from the base contact **B3.** According to some embodiments and as illustrated, the disconnecting mechanism **160,** when placed in the disconnecting position, also does not electrically disconnect the cable connector **C1'** from the base contact **B1'** or the cable connector **C2'** from the base contact **B2'.**

The disconnecting mechanism **160** can thus be used to conveniently connect and disconnect the data signal lines **L1, L2** at the SPD assembly **101.** The operator may wish to disconnect the data signal lines **L1, L2** in this manner to make measurements or any other suitable purpose.

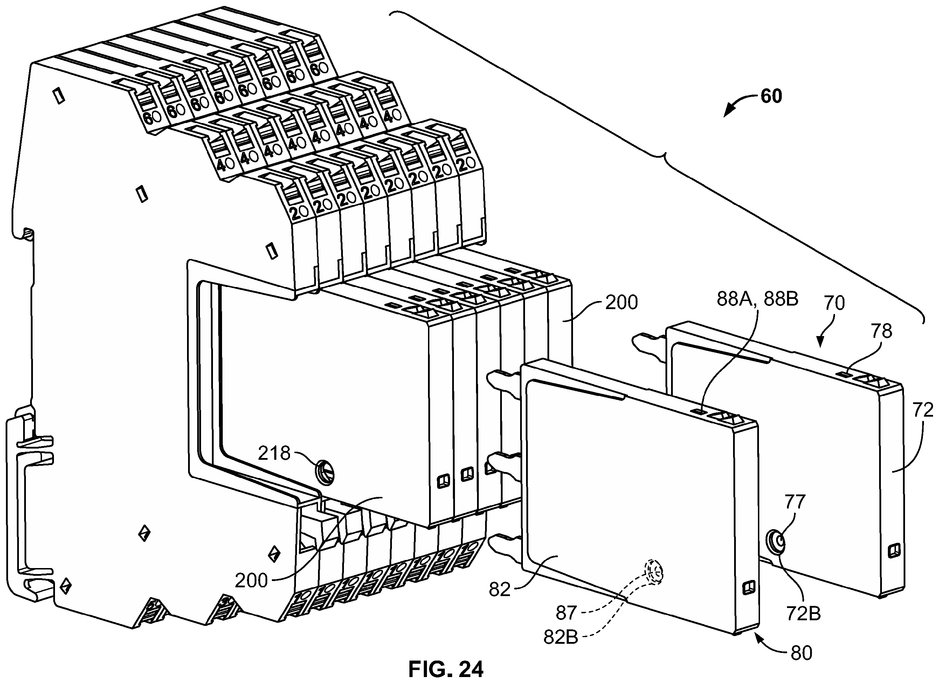

SPD assemblies as disclosed herein may be in incorporated into a data signal SPD system that monitors a status of the SPD assembly. For example, and with reference to **FIGS. 23-25****,** a data signal SPD system **60** according to some embodiments includes an optical transmitter module or assembly **70,** an optical receiver module or assembly **80,** a remote monitoring receiver **64,** and one or more of the SPD assemblies **101.**

The transmitter assembly **70** includes a housing **72** having a window opening **72B** therein. The transmitter assembly **70** further includes a power supply **74,** a processor **76** (*e.g*., a microcontroller), and an optical radiation emitter **77.** In some embodiments, the optical radiation emitter **77** is a light emitting diode (LED). In some embodiments, the optical radiation emitter **77** is an infrared (IR) emitter. The transmitter assembly **70** may include an indicator light emitter **78** (*e.g*., LED) to indicate when the transmitter assembly **70** is emitting light.

The receiver assembly **80** includes a housing **82** having a window opening **82B** therein. The receiver assembly **80** further includes a power supply **84,** a remote signal transmitter **85** (including remote contacts **85A),** a processor **86** (*e.g*., a microcontroller), and photo sensor **87.** In some embodiments, the optical radiation sensor **87** is a phototransistor. In some embodiments, the optical radiation emitter **77** is an infrared (IR) photo sensor. The receiver assembly **80** may include a first indicator light emitter **88A** (*e.g*., LED) to indicate when the receiver assembly **80** is active and receiving light from the optical radiation emitter **77,** and a second indicator light emitter 88B (*e*.*g*., LED) to indicate when the receiver assembly **80** is active and is not receiving light from the optical radiation emitter 77.

The assemblies **70, 101, 80** are mounted on the DIN rail **40** in series along the axis **K1-K1** to form a multiple module SPD assembly **61** including an array of the SPD assemblies **101** with the transmitter assembly **70** and the receiver assembly **80** located on the opposed ends of the stack or array. The window openings **218** of the SPD assemblies **101** are coaxially aligned to form a continuous beam pathway **BB.** The window openings **72B, 82B** face inwardly toward the SPD assemblies **101** and are coaxially aligned with the window openings **218.**

In use, the transmitter assembly **70** emits an optical beam **B** from the emitter **77** along a path toward the photo sensor **87.** The processor **86** monitors the signal from the photo sensor **87** to determine whether the optical beam **B** is incident on the photo sensor **87.** When the SPD assemblies **101** are all non-failed, the window openings **218** of the SPD assemblies **101** are not blocked by their indicator members **282** and the optical beam **B** passes through the window openings **72B, 218, 82B** to the photo sensor **87.** When an SPD assembly **101** fails, its indicator mechanism **280** is actuated as described above (*i*.*e*., by release of a thermal actuator **262),** and its deployed indicator member **282** blocks the optical beam **B** from reaching the photo sensor **87.** The processor **86** may send a corresponding failure indication signal to the remote receiver **64** using the remote signal transmitter **85** (via the contacts **85A** or wirelessly) and/or provide an alert via the emitter **88B.**

The remote receiver **64** may be configured to issue a remote alert responsive to the signal from the remote signal transmitter **85.** In some embodiments, all or part of the remote receiver **64** is located remotely from the SPD assembly **61.** For example, in some embodiments the remote receiver **64** includes a monitoring circuit or device located in different cabinet, room, building, or facility than the SPD assembly **61.** In other embodiments, the remote receiver **64** includes a monitoring circuit or device integrated into the SPD assembly **61.** The remote receiver **64** may include a device configured to record or issue an alarm (*e.g*., visible or audible) in response to the signal from the remote signal transmitter **85** indicating a change in state of the module **100.**

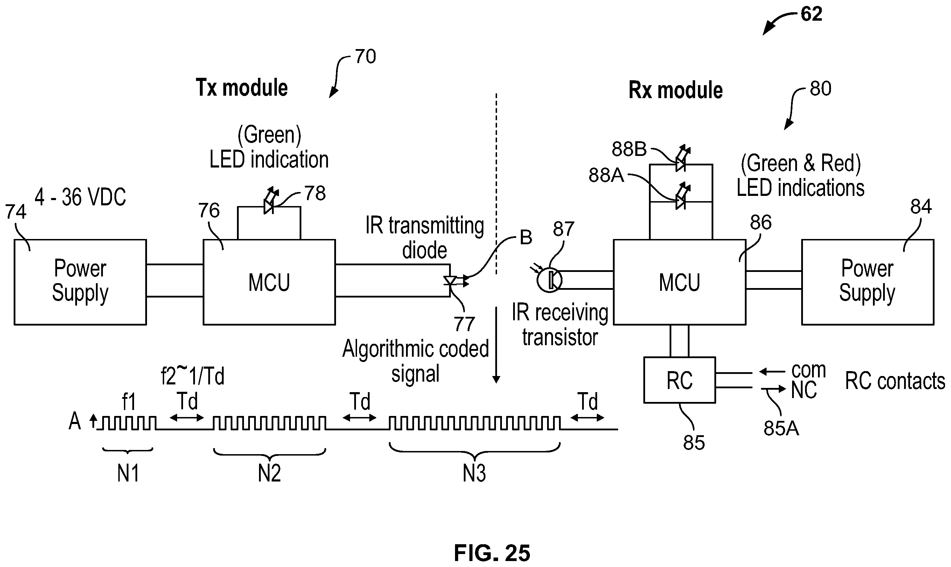

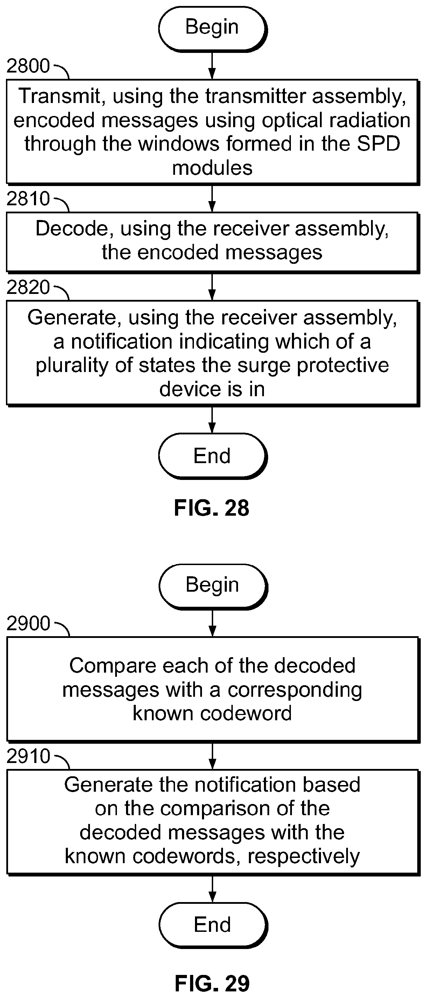

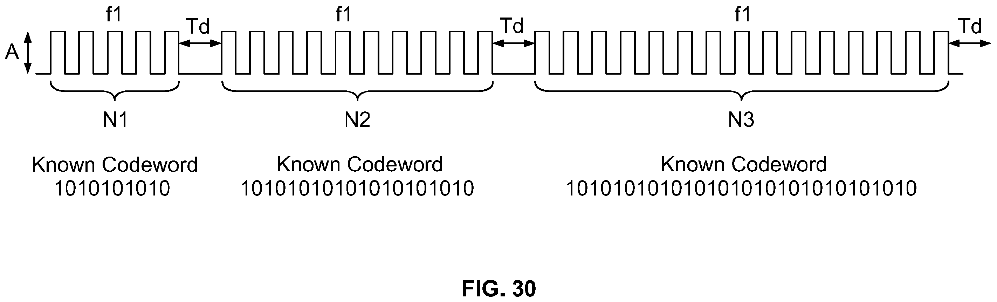

In some embodiments, the transmitter assembly **70** may be configured to transmit an algorithmic coded signal via the optical beam **B.** Referring now to **FIG. 28****,** operations begin at block **2800** where the transmitter assembly **2800** transmits one or more encoded messages using the optical beam B through the window openings **218** formed in the SPD modules **200.** The receiver assembly **80** is configured to decode the one or more encoded messages at block **2810** and, at block **2820,** generate a notification or alert via the remote signal transmitter indicating which of a plurality of states the SPD system **60** is in. With reference to **FIGS. 25** **and** **30****,** the transmitter processor **76** (MCU unit) powers/supplies the IR transmitting diode **77** with a periodical burst square wave signal having an amplitude (A), a main frequency (f1) for the individual bursts, and a secondary burst frequency (f2), which is based on the time delay between the individual bursts. In the example shown in **FIGS. 25** and **30****,** three bursts are used, but it will be understood that one or more bursts may be used according to various embodiments of the inventive concept. The burst packages are separated by the time delay Td (~1/f2) and each burst package has a specified number of pulses (N1, N2, and N3) at the main frequency f1.

Each pulse or non-pulse in a burst package may represent one bit of message. In the example of **FIGS. 25** and **30****,** the three transmitted messages corresponding to a 10 bit message, a 20 bit message, and a 30 bit message respectively of alternating ones and zeros, i.e., 1010101010, 10101010101010101010, and 101010101010101010101010101010. The transmitter assembly **70** is configured to use the optical radiation emitter **77** to transmit these messages corresponding to known code words, i.e., 10, 20, and 30 bit messages with alternating ones and zeros. Based on the known timing delay between the individual bursts Td and the length of each burst based on the main frequency **f1,** the receiver assembly **80** may be configured to use the radiation sensor **87** to begin detecting the ones and zeros, i.e., pulses in which the amplitude A of the signal exceeds a threshold and non-pulses, respectively. For each burst package, the message transmitted in the burst package is decoded and the number of one bits in the message is counted and the number of zero bits in the message is counted. Referring now to **FIG. 29****,** each of the decoded messages is compared with a corresponding known codeword at block **2900.** This comparison may be performed by determining if the number of one bits and the number of zero bits equal the expected number of one bits and the expected number of zero bits in the known codeword. The notification of the state of the SPD system **60** may be generated at block **2910** based on the comparison of the decoded messages with the known codewords, respectively. Various thresholds of sensitivity may be defined in determining how to determine which state the SPD system **60** is in based on the comparison of the decoded messages with the known codeword. For example, the plurality of states of the SPD system **60** may comprise none of the SPD modules **200** have activated, at least one of the plurality of SPD modules **200** has activated, or secondary optical radiation from a secondary source has penetrated the plurality of window openings **218.** As a one bit may be decoded as the successful transmission of light through the window openings **218,** a threshold may be set that if a decoded message includes at least 80% of the expected number of one bits as the known codeword, then it will be presumed that none of the SPD modules **200** has activated and the alert or notification may be generated that the SPD system **60** is in a state in which none of the SPD modules **200** has activated. Otherwise, it will be presumed that at least one of the SPD modules **200** has activated due the alert or notification may be generated that the SPD system **60** is in a state in which one or more SPD modules **200** have activated. In the example shown in which three different messages of different bit lengths are used, i.e., three consecutive burst packages, the threshold criterion for determining the state of the SPD system **60** may be applied to each message individually or all three as a group. For example, if any of the three decoded messages fails to include 80% of the expected number of one bits, then it may be presumed that one or more of the SPD modules **200** has activated. In other embodiments, the total number of one bits across all three decoded messages may be summed and compared to the expected number of one bits in the known codewords to and as long as the summed total is at least 80% of the expected number of one bits, then it may be presumed that none of the SPD modules **200** has activated; otherwise, it will be presumed that one or more of the SPD modules **200** has activated. While some embodiments have been described by way of example with respect to counting the expected number of one bits in a decoded message for a burst package, it may be more generally described as comparing decoded message(s) with their respective known codeword(s) and determining the number of bits that differ and the number of bits that correspond to each other. If the number of bits that correspond to each other exceeds a defined threshold, then it may be presumed that none of the SPD modules **200** has activated; otherwise, it may be presumed that at least one of the SPD modules **200** has activated. This threshold may be applied to the decoded message for each burst package individually with a decision on the state of the SPD system **60** made based on this one message or, in other embodiments, the threshold may be applied across multiple messages corresponding to multiple burst packages and the threshold applied to the total matching bits and differing bits with known codewords across all messages.

As described above, in some embodiments, the presence of radiation may be decoded at the receiver assembly **80** via the optical radiation sensor **87** as a one bit. In some environments, optical radiation from an external source, e.g,, ambient lighting from a room and/or the sun may penetrate the SPD system **60** and result in messages for the individual burst packages being decoded with excessive numbers of one bit. For example, instead of a 10-bit burst package message having five ones and five zeros, the message may be decoded as 1111111011. An IR light penetration threshold, which may be termed a repeating bit threshold, may be defined and if the number of consecutive one bits exceeds this threshold, then it may be determined that the SPD system **60** is in a state in which optical radiation from a secondary source has penetrated the plurality of window openings 218 and a notification or alert generated accordingly. This repeating bit threshold may be set in consideration of the known codewords transmitted by the transmitter assembly **70.** For example, if the known codewords include multiple intervals of many consecutive one bits, then the repeating bit threshold for detecting optical radiation from a secondary source may be set relatively high. In the example of **FIGS. 25** and **29** in which the known codewords are 10, 20, and 30 bit bursts of alternating ones and zeros, the repeating bit threshold may be set relatively low, such as four consecutive one bits.

The main frequency **f1** and the delay between burst packages may be set to avoid false alerts or notifications due to vibration noise. The long duration of the individual pulses for the bits and the generally high number of bits may reduce the number of false alerts or notification due to vibration noise. In some embodiments, the values are in the following ranges: amplitude A (5-10V); Frequency **f1** (10-100Hz); Bit rate (20-200 bps); Frequency **f2** (0.2 - 20Hz); Time delay Td (2 - 10 seconds); and Number of bits N1, N2, N3 (10 - 100 bits). In some embodiments, the number of bits in successive burst packages may increase, such that the number of bits in each burst package may be given by N1, N2=2N1, and N3=3N1. When the frequency f1 is 20 Hz, the bit rate may be 40 bps.

The receiver processor **86** (MCU unit) measures the voltage signal on the receiver's IR receiving transistors **87** and decodes the received signal by evaluating the signal amplitude, frequency and number of pulses in consecutive bursts. If specific/required criterions are not met, which will occur if one or multiple SPD modules in the array reach their failed or end-of-life state closing the light tunnel or path through the SPD module, the receiver unit **80** will signalize the failed/end-of-life state of the SPD via a remote alert via the transmitter **85** and the LED **88B.** Such a signal coding and decoding is implemented in order to prevent false end-of-life indication, which may happen during the installation of the SPD, external IR disturbances, vibrations etc.

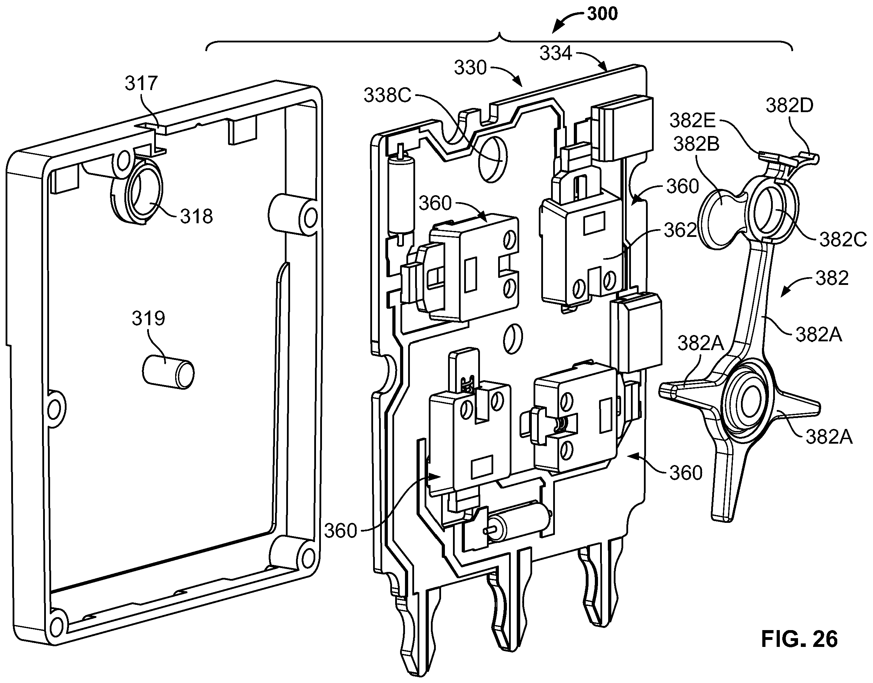

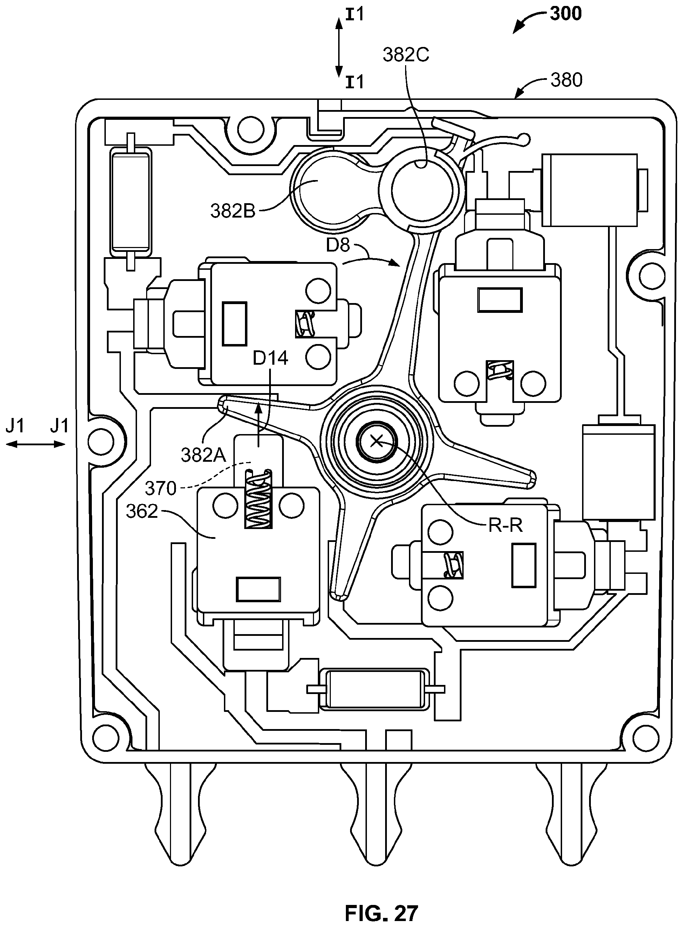

With reference to **FIGS. 26** and **27****,** an SPD module **300** according to further embodiments is shown therein. The SPD module **300** can be used in place of the SPD module **200** in the SPD assembly **101.** The SPD module **300** may be constructed and operate in the same manner as of the SPD module **200,** except as follows.

The SPD module **300** includes an electrical assembly **330,** a PCB **334,** and overvoltage protection components **352, 354, 356, 358** corresponding to the electrical assembly **330,** the PCB **334,** and the components **352, 354, 356.** The SPD module **300** includes a rotating indicator mechanism **380** in place of the translating indicator mechanism **280.** The SPD module **300** includes four thermal actuators **360** corresponding to the thermal actuators **260.** The electrical assembly **330** includes traces, pads, and solders corresponding to those of the SPD module **200** to mechanically and electrically connect the thermal actuators **260** and the overvoltage protection components **352, 354, 356, 358** as discussed for the SPD module **200.** The thermal actuators **362,** electrical components, traces, pads, and solders are reconfigured as compared to those of the SPD module **200** to accommodate the movement of the rotating indicator mechanism **380.**

The rotating indicator mechanism **380** includes an indicator member **382,** an opening **338C** in the PCB **334,** openings **318** in the side walls of the module housing, an indicator window **317** in the front of the housing, and a rotation post **319,** which may be integrally formed with the housing. The indicator member **382** includes four actuation legs **382A,** a shutter portion **382B,** an opening **382C,** a retainer feature **382D,** and an indicator portion **382E.**

The indicator member **382** is mounted on the post **319** to rotate about an axis **R-R.** The axis **R-R** is perpendicular to each of the PCB fore-aft axis **I1-I1** and the PCB lateral axis **J1-J1.**

In a ready position, the opening **382C** is aligned with the openings **318, 338C** and each leg **382A** is disposed adjacent the front end of the switch member **370** of a respective one of the thermal actuators **362.** The retainer feature **382D** engages the housing **310** to retain the indicator member **382** in the ready position.

When a thermal disconnector mechanism **360** is triggered, the thermal actuator **362** thereof is actuated so that its spring-loaded switch member **370** is released in the direction **D14** and forces the indicator member **382** to rotate in a direction **D8** to an indicating position as shown in **FIG. 27****.** The closure of the light path through the openings **318, 338C** can be used to enable optical monitoring as described herein with regard to the SPD assembly **101** and the SPD system **60.** In the indicating position, the shutter portion **382B** covers or blocks the openings **318, 338C.** Additionally, the indicator portion **382E** is relocated away from the indicator window **317** to provide a local alert.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

It will be understood that, although the terms "first," "second," etc. may be used herein to describe various elements, these elements should not be limited by these terms. These terms are only used to distinguish one element from another. Thus, a first element could be termed a second element without departing from the teachings of the inventive subject matter.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

Some aspects and embodiments of the present invention may be understood by reference to the following numbered clauses:
1. A surge protective device (SPD) assembly comprising:
   a base; and
   an SPD module configured to be mounted on the base, the SPD module including:
      an SPD module printed circuit board (PCB);
      an SPD module circuit at least partly embodied in the SPD module PCB and including an overvoltage protection component mounted on the SPD module PCB; and
      a thermal disconnector mechanism mounted on the SPD module PCB in a ready configuration;
      wherein:
         the thermal disconnector mechanism is operative to transition from the ready configuration to an actuated configuration responsive to sufficient overheating of the overvoltage protection component;
         when the thermal disconnector mechanism is positioned in the ready configuration, the SPD circuit forms a first current path through the overvoltage protection component; and
         when the thermal disconnector mechanism is positioned in the actuated configuration, the thermal disconnector mechanism forms an alternate second current path that bypasses the overvoltage protection component.
2. The SPD module of Clause 1 wherein:
   the thermal disconnector mechanism includes first and second electrically conductive bypass contacts mounted on the SPD module PCB and connected to the SPD module circuit;
   the thermal disconnector mechanism includes a thermal actuator including a switch member, the switch member including an electrically conductive portion;
   the thermal disconnector mechanism is transitioned from the ready configuration to the actuated configuration by displacing the switch member is movable from a ready position to a displaced position to thereby transition the thermal disconnector mechanism from the ready configuration to the actuated configuration;
   in the ready configuration, the electrically conductive portion does not electrically connect the first and second bypass contacts; and
   when the thermal disconnector mechanism is positioned in the actuated configuration, the switch member is in the displaced position and the electrically conductive portion contacts and electrically connects the first and second bypass contacts to form the alternate second current path through the electrically conductive portion and the first and second bypass contacts that bypasses the overvoltage protection component.
3. The SPD assembly of Clause 2 wherein the first bypass contact is an electrically conductive first pin mounted on the SPD module PCB, and the second bypass contact is an electrically conductive second pin mounted on the SPD module PCB
4. The SPD assembly of Clause 2 or 3 wherein:
   the switch member includes a body formed of an electrically insulating material; and
   the electrically conductive portion is a layer of an electrically conductive material.
5. The SPD assembly of any one of Clauses 2 to 4 wherein:
   the switch member is loaded to move from the ready position to the displaced position;
   the switch member is held in the ready position by solder; and
   the solder is configured to be melted by heat from the overvoltage protection component to thereby release the switch member into the displaced position.
6. The SPD assembly of Clause 5 wherein:
   the SPD module circuit includes first and second contact pads on the SPD module PCB;
   the switch member includes a second electrically conductive portion;
   the solder is located on the first and second contact pads and secures the second electrically conductive portion to the first and second contact pads; and
   the second electrically conductive portion electrically connects the first and second contact pads when the thermal disconnector mechanism is in the ready configuration and does not electrically connect the first and second contact pads when the thermal disconnector mechanism is in the actuated configuration.
7. The SPD assembly of any one of Clauses 2 to 5 wherein:
   the SPD module circuit includes first and second contact pads on the SPD module PCB; and
   the switch member includes a second electrically conductive portion that electrically connects the first and second contact pads when the thermal disconnector mechanism is in the ready configuration and does not electrically connect the first and second contact pads when the thermal disconnector mechanism is in the actuated configuration.
8. The SPD assembly of any one of Clauses 2 to 7 wherein the switch member translates from the ready position to the displaced position.
9. The SPD assembly of Clause 8 wherein:
   the SPD module includes a displaceable indicator member; and
   the translation of the switch member from the ready position to the displaced position forces the indicator member to translate from a ready position to an indicating position.
10. The SPD assembly of Clause 8 wherein:
   the SPD module includes a displaceable indicator member; and
   the translation of the switch member from the ready position to the displaced position forces the indicator member to rotate from a ready position to an indicating position.
11. The SPD assembly of any preceding Clause wherein:
   the base includes a base module including:
      a base module housing;
      an input cable connector and an output cable connector on the housing;
      at least one base connector on the housing; and
      a base module circuit electrically connecting the input cable connector to the output cable connector, and electrically connecting the input cable connector and the output cable connector to the at least one base connector;
   wherein:
      the SPD module is configured to be mounted on the base module, the SPD module including:
         an SPD module housing; and
         at least one SPD module connector configured to electrically contact the at least one base connector when the SPD module is mounted on the base module and to thereby electrically connect the base module circuit to the SPD module circuit to form an SPD circuit;
      the first current path extends from the input cable connector to the output cable connector through the overvoltage protection component; and
      the second current path extends from the input cable connector to the output cable connector through the SPD module circuit and bypasses the overvoltage protection component.
12. The SPD assembly of Clause 11 wherein:
   the base module includes a disconnecting mechanism including an actuator member; and
   the actuator member is selectively operable by a user to electrically disconnect the input cable connector from the output cable connector.
13. The SPD assembly of Clause 12 wherein:
   the disconnecting mechanism includes a switch; and
   the actuator member is selectively operable by a user to electrically disconnect the input cable connector from the output cable connector via the switch.
14. The SPD assembly of any one of Clauses 11 to 13 wherein the at least one SPD module connector includes a blade connector.
15. The SPD assembly of Clause 14 wherein:
   the at least one base connector includes first and second opposed base spring contacts;
   the blade connector has a first side edge and a laterally opposing second side edge, wherein the first and second side edges are spaced apart along a lateral axis;
   the blade connector includes:
      a blade tab forming a part of the SPD module PCB;
      a first electrical contact layer disposed on the blade tab along the first side edge; and
      a second electrical contact layer on the blade tab along the second side edge; and
   the at least one base connector is configured to receive the blade connector such that the first and second base spring contacts engage the first and second electrical contact layers, respectively, and load the first and second side edges along the lateral axis.
16. The SPD assembly of Clause 15 wherein:
   the first base contact is a spring contact; and
   when the blade connector is received in the base connector, the spring contact is elastically deflected and applies a load against the first side edge along the lateral axis.
17. The SPD assembly of Clause 15 or 16 wherein the base connector is configured such that the first and second base contacts electrically engage one another when blade connector is not installed in the base connector.
18. The SPD assembly of any one of Clauses 15 to 17 wherein the first and second base contacts and the blade connector include cooperating interlock features that mechanically resist removal of the blade connector from the base connector.
19. The SPD assembly of any one of Clauses 15 to 18 wherein the first and second side edges are narrow side edges.
20. A surge protective device (SPD) module comprising:
   an SPD module printed circuit board (PCB);
   an SPD module circuit at least partly embodied in the SPD module PCB and including an overvoltage protection component mounted on the SPD module PCB; and
   a thermal disconnector mechanism mounted on the SPD module PCB in a ready configuration;
   wherein:
      the thermal disconnector mechanism is operative to transition from the ready configuration to an actuated configuration responsive to sufficient overheating of the overvoltage protection component;
      when the thermal disconnector mechanism is positioned in the ready configuration, the SPD circuit forms a first current path through the overvoltage protection component; and
      when the thermal disconnector mechanism is positioned in the actuated configuration, the thermal disconnector mechanism forms an alternate second current path that bypasses the overvoltage protection component.
21. A surge protective device (SPD) assembly comprising:
   a base including a base connector, the base connector including first and second opposed base contacts; and
   an SPD module configured to be mounted on the base, the SPD module including:
      an SPD module printed circuit board (PCB);
      an SPD module circuit including an overvoltage protection component; and
      a blade connector having a first side edge and a laterally opposing second side edge, wherein the first and second side edges are spaced apart along a lateral axis, the blade connector including:
         a blade tab forming a part of the SPD module PCB;
         a first electrical contact layer disposed on the blade tab along the first side edge; and
         a second electrical contact layer on the blade tab along the second side edge;
   wherein the base connector is configured to receive the blade connector such that the first and second base contacts engage the first and second electrical contact layers, respectively, and the first and second base contacts are loaded against the first and second side edges along the lateral axis.
22. The SPD assembly of Clause 21 wherein:
   the first base contact is a spring contact; and
   when the blade connector is received in the base connector, the spring contact is elastically deflected and applies a load against the first side edge along the lateral axis.
23. The SPD assembly of Clause 21 or 22 wherein the base connector is configured such that the first and second base contacts electrically engage one another when blade connector is not installed in the base connector.
24. The SPD assembly of any one of Clauses 21 to 23 wherein the SPD module circuit is at least partly embodied in the SPD module PCB, and the overvoltage protection component is mounted on the SPD module PCB.
25. The SPD assembly of any one of Clauses 21 to 24 wherein the first and second base contacts and the blade connector include cooperating interlock features that mechanically resist removal of the blade connector from the base connector.
26. The SPD assembly of any one of Clauses 21 to 25 wherein the first and second side edges are narrow side edges.
27. A surge protective device (SPD) assembly comprising:
   a base module including:
      a base module housing;
      an input cable connector and an output cable connector on the housing;
      at least one base connector on the housing;
      a base module circuit electrically connecting the input cable connector to the output cable connector, and electrically connecting the input cable connector and the output cable connector to the at least one base connector;
      a disconnecting mechanism including an actuator member, wherein the actuator member is selectively operable by a user to electrically disconnect the input cable connector from the output cable connector; and
   an SPD module configured to be mounted on the base module, the SPD module including:
      an SPD module housing;
      an SPD module circuit including an overvoltage protection component; and
      at least one SPD module connector configured to electrically contact the at least one base connector when the SPD module is mounted on the base module and to thereby electrically connect the base module circuit to the SPD module circuit to form an SPD circuit.
28. The SPD assembly of Clause 27 wherein:
   the disconnecting mechanism includes a switch; and
   the actuator member is selectively operable by a user to electrically disconnect the input cable connector from the output cable connector via the switch.
29. The SPD assembly of Clause 27 or 28 wherein the base module circuit includes a second overvoltage protection component.
30. A surge protective device (SPD) assembly comprising:
   an input cable connector and an output cable connector;
   a disconnecting mechanism including an actuator member, wherein the actuator member is selectively operable by a user to electrically disconnect the input cable connector from the output cable connector;
   an overvoltage protection component; and
   a thermal disconnector mechanism in a ready configuration;
   wherein:
      the thermal disconnector mechanism is operative to transition from the ready configuration to an actuated configuration responsive to overheating of the overvoltage protection component;
      the SPD assembly forms a first current path through the overvoltage protection component when the thermal disconnector mechanism is positioned in the ready configuration; and
      the SPD assembly forms an alternate second current path bypassing the overvoltage protection component when the thermal disconnector mechanism is positioned in the actuated configuration.
31. The SPD assembly of Clause 30 wherein:
   the disconnecting mechanism includes a switch; and
   the actuator member is selectively operable by a user to electrically disconnect the input cable connector from the output cable connector via the switch.
32. The SPD assembly of Clause 30 or 31 wherein:
   the SPD assembly includes a base and an SPD module configured to be mounted on the base;
   the base includes at least one base connector; and
   the SPD module includes at least one SPD module connector configured to electrically contact the at least one base connector when the SPD module is mounted on the base.
33. A surge protective device (SPD) assembly comprising:
   a plurality of SPD modules, each of the SPD modules having a window formed therein and the plurality of SPD modules being arranged, such that the windows formed therein, respectively, are axially aligned in a row;
   a transmitter assembly in a first one of the plurality of SPD modules at a first end of the row, the transmitter assembly being configured to transmit optical radiation through the windows formed in the plurality of SPD modules;
   a receiver assembly in a second one of the plurality of SPD modules at a second end of the row, the receiver assembly being configured to receive the optical radiation transmitted by the transmitter assembly;
   wherein the transmitter assembly is further configured to transmit a plurality of encoded messages via the optical radiation; and
   wherein the receiver assembly is configured to decode the plurality of encoded messages and to generate a notification indicating which of a plurality of states the surge protective device is in based on the decoding of the plurality of encoded messages.
34. The SPD assembly of Clause 33, wherein the plurality of states comprises none of the plurality of SPD modules have activated; at least one of the plurality of SPD modules has activated; and secondary optical radiation from a secondary source has penetrated the plurality of windows of the plurality of SPD modules.
35. The SPD assembly of Clause 34, wherein each of the plurality of encoded messages comprises at least one bit and corresponds to a respective one of a plurality of known codewords;
   wherein the receiver assembly is further configured to compare each of the decoded messages with a corresponding one of the plurality of known codewords; and
   wherein the receiver assembly is further configured to generate the notification based on comparing the plurality of decoded messages with the plurality of known codewords, respectively.
36. The SPD assembly of Clause 35, wherein the receiver assembly is further configured to determine a number of bits that differ between the plurality of decoded messages and the plurality of known codewords, respectively, based on the comparing the plurality of decoded messages with the plurality of known codewords, respectively.
37. The SPD assembly of Clause 36, wherein the plurality of known codewords has a plurality of bit thresholds associated therewith, respectively; and
   wherein the receiver assembly is further configured to generate the notification that the surge protective device is in the none of the plurality of SPD modules have activated state when the number of bits that differ between the plurality of decoded messages and the plurality of known codewords, respectively, is less than the plurality of bit thresholds, respectively.
38. The SPD assembly of Clause 36 or 37, wherein the plurality of known codewords has a plurality of bit thresholds associated therewith, respectively; and
   wherein the receiver assembly is further configured to generate the notification that the surge protective device is in the at least one of the plurality of SPD modules has activated state when the number of bits that differ between at least one of the plurality of decoded messages and at least one of the plurality of known codewords, respectively, is not less than the plurality of bit thresholds, respectively.
39. The SPD assembly of any one of Clauses 36 to 38, wherein the receiver assembly is further configured to generate the notification that the surge protective device is in the secondary optical radiation from the secondary source has penetrated the plurality of windows state when a number of consecutive bits in at least one of the plurality of decoded messages exceeds a repeating bit threshold.
40. The SPD assembly of any one of Clauses 33 to 39, wherein the plurality of encoded messages comprises three encoded messages;
   wherein a first one of the plurality of encoded messages comprises N bits, a second one of the plurality of encoded messages comprises 2N bits, and a third one of the plurality of encoded messages comprises 3N bits; and
   wherein N is a positive integer.
41. The SPD assembly of any one of Clauses 33 to 40, the transmitter assembly is further configured to transmit each of the plurality of encoded messages at a frequency of about 40 bits/sec.
42. The SPD assembly of Clause 41, wherein the transmitter assembly is further configured to delay about 5 seconds between transmitting respective ones of the plurality of encoded messages.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

## Claims

1. A surge protective device (SPD) module (200) comprising:
an SPD module printed circuit board (PCB) (234) comprising first and second electrical bypass contacts (266A, 266B) mounted on the SPD module PCB;
an SPD module circuit (EM) at least partly embodied in the SPD module PCB and comprising an electrical protection component (256), the SPD module circuit forming a first current path (E9) through the electrical protection component, wherein the first and second bypass contacts are electrically connected to the SDP module circuit; and,
a switch member (270) comprising a body (272) having a first electrically conductive portion (274) operative to transition from the ready configuration to an actuated configuration responsive to sufficient overheating of the electrical protection component, wherein in the ready configuration, the first electrically conductive portion does not electrically connect the first and second bypass contacts, wherein the actuated configuration the switch member contacts and electrically connects the first and second bypass contacts to form an alternate second current path (E11) through the first electrically conductive portion and the first and second bypass contacts.

2. The SPD module of Claim 1 wherein the first bypass contact (266A) is an electrically conductive first pin mounted on the SPD module PCB, and the second bypass contact (266B) is an electrically conductive second pin mounted on the SPD module PCB.

3. The SPD module of Claim 2 further comprising a spring (268) to bias the switch member to the actuated configuration upon melting of solder (S4).

4. The SPD module of any preceding claim wherein the switch member (270) is held in the ready configuration by solder (S4) configured to be melted by heat from the electrical protection component to thereby release the switch member into the actuated configuration.

5. The SPD module of Claim 4 wherein the body is formed of an electrically insulating material comprising a front end (272A) and an opposing rear end (272B), wherein the first electrically conductive portion (274) is defined by laterally opposed front contact surfaces (273A) of the body.

6. The SPD module of Claim 5, wherein the laterally opposed front contact surfaces are electrically connected by an electrically conductive layer.

7. The SPD module of Claim 5 or Claim 6, wherein the laterally opposed front contact surfaces are not electrically connected with the first and second bypass contacts in the ready configuration.

8. The SPD module of claim any of Claims 5-7 further comprising a thermal actuator (262) comprised of a body (264) having a guide slot, the guide slot having the first and second bypass contacts configured as first and second laterally spaced apart conductive pins.

9. The SPD module of Claim 8, wherein in the actuated configuration the body advances such that the first second bypass contacts (266A, 266B) are electrically connected to the laterally opposed front contact surfaces (273A).

10. The SPD module of Claim 8 or Claim 9, wherein the body (264) of the thermal actuator is formed of an electrically insulating material.

11. The SPD module of Claim 5, wherein the body (272) further comprises a pair of laterally spaced apart rear contact surfaces (273B).

12. The SPD module of Claim 11, wherein the pair of laterally spaced apart rear contact surfaces (273B) are electrically connected by a rear electrically conductive layer (276).

13. The SPD module of Claim 11 or Claim 12 further comprising first and second contact pads (P2, P6) electrically connected to the electrical component element and mounted on the SPD module PCB, wherein in the ready configuration the first and second contact pads are in contact with the pair of laterally spaced apart rear contact surfaces.

14. The SPD module of Claim 1, wherein:
the body (272) is formed of an electrically insulating material comprising a front end (272A) and an opposing rear end (272B),
the first electrically conductive portion is defined by laterally opposed front contact surfaces (273A) of the body, wherein the laterally opposed front contact surfaces are not electrically connected with the first and second bypass contacts in the ready configuration, wherein in the actuated configuration; and,
wherein the body (272) further comprises a pair of laterally spaced apart rear contact surfaces (273B), wherein in the ready configuration the first and second pair of laterally spaced apart rear contact surfaces are electrically connected to first and second contact pads, the first and second contact pads electrically connected to the electrical component element and mounted on the SPD module PCB.

15. The SPD module of Claim 14, wherein in the actuated configuration the body (272) advances such that the first and second bypass contacts (266A, 266B) are electrically connected to the laterally opposed front contact surfaces (273A), and first and second contact pads (P2, P6) on the SPD module (PCB) are not held in contact with the pair of laterally spaced apart rear contact surfaces (273B).
